**Europäisches Patentamt**

**European Patent Office**

**Office européen des brevets**

(19)

(11) Veröffentlichungsnummer: **0 363 838 B1**

(12)

# EUROPÄISCHE PATENTSCHRIFT

(45) Veröffentlichungstag der Patentschrift: **28.04.93**

(51) Int. Cl.⁵: **B01D 3/00**, C02F 1/04, B01D 1/28

(21) Anmeldenummer: **89118579.5**

(22) Anmeldetag: **06.10.89**

(54) **Verfahren und Vorrichtung zur Gewinnung reinen Wassers und im Wasser gelöster Stoffe.**

(30) Priorität: **08.10.88 DE 3834319**

(43) Veröffentlichungstag der Anmeldung:
**18.04.90 Patentblatt 90/16**

(45) Bekanntmachung des Hinweises auf die Patenterteilung:
**28.04.93 Patentblatt 93/17**

(84) Benannte Vertragsstaaten:
**AT BE CH ES FR GB GR IT LI LU NL SE**

(56) Entgegenhaltungen:
DE-A- 3 337 360
GB-A- 687 106

(73) Patentinhaber: **Iniotakis, Nicolaos**
**Kopernikusstrasse 64**
**W-5170 Jülich(DE)**

Patentinhaber: **von der Decken, Klaus-Benedict, Prof.**
**Reumontstrasse 34**
**W-5100 Aachen(DE)**

Patentinhaber: **Fröhling, Werner, Dr.**
**Keltenstrasse 38**
**W-5160 Düren(DE)**

Patentinhaber: **DIMOTIKI EPICHIRISIS YDREU-SIS KAI APOCHETEUSIS HERAKLION**
**Byronos Street 1**
**GR-71202 Heraklion Kreta(GR)**

(72) Erfinder: **Iniotakis, Nicolaos**
**Kopernikusstrasse 64**
**W-5170 Jülich(DE)**
Erfinder: **Von der Decken, Claus-Benedikt, Prof. Dr.**
**Reumontstrasse 34**
**W-5100 Aachen(DE)**
Erfinder: **Michailidis, Panagiotis, Prof. Dr.**
**Odos Esperidon - Kipoupoli**
**GR-71306 Heraklion Kreta(GR)**
Erfinder: **Dialynas, Georgios**
**Odos Myrionoy 4**
**GR-71202 Heraklion Kreta(GR)**
Erfinder: **Papamatheakis, Charilaos**
**Odos Char. Trikoupi 9**
**GR-71306 Heraklion Kreta(GR)**

EP 0 363 838 B1

Erfinder: **Kotsyphos, Emmanouel**
**Odos Antoniou Simiakou 23**
**GR-71202 Heraklion Kreta(GR)**
Erfinder: **Karademiris, Ioannis**
**Odos Odysseos 53**
**GR-71307 Heraklion Kreta(GR)**

## Beschreibung

Die Erfindung bezieht sich auf ein Verfahren zur Gewinnung reinen Wassers und im Wasser gelöster Stoffe durch Einbringen von die gelösten Stoffe enthaltendem Wasser in feiner Verteilung in einen inerten Schleppgasstrom. Das Wasser wird in einer solchen Menge eingebracht, daß sich nach Erhitzen des gebildeten Schleppgas/Wasser-Gemisches bis zur Verdampfung des Wassers und Überhitzung des erzeugten Wasserdampfes unter Ausbildung eines wassertröpfchenfreien Schleppgas/Wasserdampf-Gemisches ein vorgegebener Partialdruck für des Schleppgas im Schleppgas/Wasserdampf-Gemisch einstellt. Die dabei im Schleppgas/Wasserdampf-Gemisch entstehenden Feststoffpartikeln werden aus dem Schleppgas/Wasserdampf-Gemisch abgeschieden und das verbleibende gereinigte Schleppgas-Wasserdampf-Gemisch wird abgeführt. Es wird bis zur Kondensation des Wasserdampfes abgekühlt, wobei die dabei freiwerdende Wärme an ein bei Durchführung des Verfahrens zu erwärmendes Medium abgegeben wird. Gegenstand der Erfindung ist auch eine Vorrichtung zur Durchführung des Verfahrens.

Ein Reinwasser-Gewinnungsverfahren dieser Art ist aus DE-OS-33 37 360 bekannt. Mit diesem Verfahren wird Meerwasser zur Erzeugung von Trinkwasser entsalzt. Das Verfahren dient aber auch zur Reinigung von Industrieabwässern und zur Wiedergewinnung vom im Abwasser gelöster Salze. Das zu reinigende Wasser wird beim bekannten Verfahren in einem Inertgasstrom verdampft und durch Überhitzen des gebildeten Wasserdampfes entsalzt. Dabei wird der salzhaltige Rückstand in nicht-flüchtiger Phase ausgeschieden. Wesentlich ist, daß die zur Aufheizung des Inertgas/Wasser-Gemisches notwendigen thermische Energie durch Rückkühlung des Wasserdampfes bis unter dessen Kondensationstemperatur nach Kompression des gereinigten Inertgas/Wasserdampf-Gemisches zurückgewonnen wird. Die zurückgewonnene Wärme wird zur Erhitzung des Inertgas/Wasserdampf-Gemisches eingesetzt. Dabei wird der Partialdruck des Wasserdampfes im zu reinigenden Inertgas/Wasserdampf-Gemisch dem gewünschten Feuchtegehalt der Rückstandsfraktion entsprechend eingestellt.

Aufgabe der Erfindung ist es, Salze oder Hydrate bei der notwendigen Erniedrigung des Partialdruckverhältnisses und bei möglichst niedriger Überhitzungstemperatur in der Weise zu gewinnen, daß zur Erhitung des Schleppgas/Wasser-Gemisches eine hohe Temperaturdifferenz zur Verfügung steht bei dennoch geringem Energieverbrauch, so daß sowohl die Betriebskosten aber auch die Investitionskosten zur Reinwasser- und Salzgewinnung wirtschaftlich tragbar bleiben.

Diese Aufgabe wird ausgehend von einem Verfahren der eingangs bezeichneten Art durch die in Patentanspruch 1 angegebenen Maßnahmen gelöst. Danach wird das zu reinigende Wasser zunächst unter Wärmezufuhr teilverdampft. Dabei entsteht als flüssige Fraktion eine aufkonzentrierte Sole, die in den inerten Schleppgasstrom in feiner Verteilung eingebracht wird. Der bei der Teilverdampfung gebildete Wasserdampf wird nach Abscheidung der Sole komprimiert und im Wärmeaustausch einerseits mit dem die Sole enthaltenden aufzuheizenden Schleppgasstrom und andererseits unter Erhitzung des teilzuverdampfenden Wassers abgekühlt. Die Menge der in den Schleppgasstrom zuzugebenden Sole wird - in gleicher Weise wie beim vorbekannten Verfahren die Menge des zu reinigenden Wassers - bestimmt vom gewünschten Partialdruckverhältnis $P_{Sch}/P_t$ zwischen Schleppgaspartialdruck $P_{Sch}$ und Systemdruck des Schleppgas/Wasserdampf-Gemisches $P_t$. Das Partialdruckverhältnis und der Systemdruck werden so eingestellt, daß am Abscheider je nach Vorgabe trockene Salze oder Hydrate gewonnen werden. In Abhängigkeit hiervon ist dann der Kompressionsdruck für den Wasserdampf derart zu wählen, daß sich zur Lieferung der notwendigen thermischen Energie für die Aufheizung des Schleppgas/Wasser-Gemisches bis zur Verdampfung des Wassers und zur Überhitzung des dabei im Gemisch gebildeten Wasserdampfes eine ausreichend hohe Taupunkttemperatur des kondensierenden Wasserdampfes ergibt. Diese Taupunkttemperatur ist dann auch maßgebend für die Erhitzung des teilzuverdampfenden Wassers, da auch für die Teilverdampfung die frei werdende Kondensationswärme des beim Wärmeaustausch mit dem Wasser kondensierenden komprimierten Wasserdampfs genutzt wird.

Bei Überhitzung des Schleppgas/Wasserdampf-Gemisches bilden sich als Rückstände der verdampfenden Sole Feststoffpartikeln aus, die abgeschieden werden. Das verbleibende Schleppgas/Wasserdampf-Gemisch dient als Heizmittel zur Vorwärmung des zu reinigenden Wassers. Bei der Aufheizung des Wassers wird der Wasserdampf im Schleppgas/Wasserdampf-Gemisch kondensiert und als Reinwasser ausgeschieden. Zusammen mit dem Kondensat aus der Teilverdampfungsstufe ist das Wasser als Trinkwasser oder Brauchwasser wieder verwendbar. Nach Ausscheiden des Kondensats wird das Schleppgas im Kreislauf zurückgeführt und erneut mit Sole aus der Teilverdampfungsstufe beladen.

Vorteilhaft ist beim erfindungsgemäßen Verfahren die optimale Energieausnutzung unter weitgehender Rückgewinnung erzeugter Wärme. Dabei lassen sich durch die Teilverdampfung des verunreinigten Wassers als erste Stufe der Reinwassergewinnung Verkrustungen bei der Feststoffabscheidung vermeiden. Auch die Korngröße der sich bildenden Salze und deren Wassergehalt ist durch entsprechende Wahl des Partialdruckverhältnisses besser als beim bekannten Verfahren beeinflußbar.

Zur Optimierung der Energieausnutzung ist es nach Patentanspruch 2 vorgesehen, die Teilverdampfung des zu reinigenden Wassers zumindest für eine Teilmenge des Wassers in mehreren Wärmetauscherstufen durchzuführen. Dabei ist es gemäß Patentanspruch 3 zweckmäßig, zur Vorwärmung des verunreinigten Wassers neben dem komprimierten Schleppgas/Wasserdampf-Gemisch auch die Restwärme des komprimierten Wasserdampfs auszunutzen, die der Wasserdampf noch nach seiner Wärmeabgabe und Abkühlung bei der Teilverdampfung des zu reinigenden Wassers aufweist. Bevorzugt wird dabei auch die Wärme der bei der Teilverdampfung erzeugten Sole und die Wärme des vom Schleppgas/Wasserdampf-Gemisches abgetrennten Reinwasserkondensats zur Vorwärmung des zu reinigenden Wassers genutzt, Patentansprüche 4 und 5.

Zur Verringerung der Verkrustungsgefahr werden nach Patentanspruch 6 dem verunreinigten Wasser vor seiner Teilverdampfung Salze zugegeben, die der Art von vom Wasser mitgeführten Inkrustationsbildnern entsprechen, wie beispielsweise bei der Entsalzung von Meerwasser Gips. Die Salze werden in einer solchen Menge zugegeben, daß eine Übersättigung des Wassers hinsichtlich der zugegebenen Salze eintritt. Bevorzugt ist eine 10 bis 30 %ige Übersättigung einzustellen. Die Salze werden nach der Teilverdampfung des verunreinigten Wassers von der erzeugten Sole isoliert. Ein Teil der Salze wird im Kreislauf geführt und dem Wasser vor dessen Teilverdampfung wieder zugegeben, Patentanspruch 7. Statt der Salze oder zusätzlich lassen sich zur Verhinderung von Verkrustungen auch abrasive Stoffe einsetzen, Patentanspruch 8. Die abrasiven Stoffe lassen sich im Kreislauf führen, wobei sie nach der Teilverdampfung des Wassers und der Erzeugung von Sole wieder abgetrennt werden. Die abrasiven Stoffe können aber auch als ortsfeste Schüttgutschicht eingesetzt sein, innerhalb der das Wasser zur Verdampfung gebracht wird.

Die Korngröße der abzuscheidenden Salze wird durch Einbringen von Salzkeimen oder Salzkristallen beeinflußt, Patentanspruch 9. Es werden auch hier die Salze bis zu einer Menge zugegeben, die zu einer 10 bis 30 %igen Übersättigung der Sole führt. Als Salzkeime oder Salzkristalle lassen sich die als Endprodukte nach Überhitzung des Wasserdampfes im Schleppgas/Wasserdampf-Gemisch gewonnenen arteigenen Salze verwenden. Sie dienen zugleich zur Vermeidung von Verkrustungen. Bevorzugt werden die Salzkeime vor einer die Sole fördernden Solepumpe zugegeben. Patentanspruch 10.

In weiterer Ausgestaltung der Erfindung ist es nach Patentanspruch 11 vorgesehen, den bei der Teilverdampfung des verunreinigten Wassers in mehreren Wärmetauscherstufen gebildeten Wasserdampf der letzten und vorletzten Wärmetauscherstufe zu entnehmen. Zur Optimierung der Wärmerückgewinnung wird die erforderliche Wärme zur Verdampfung der Sole in der letzten Wärmetauscherstufe von Wasserdampf gewonnen, der in der vorletzten Wärmetauscherstufe gebildet wurde, während der in der letzten Wärmetauscherstufe gebildete Wasserdampf wieder zur Beheizung von vorgeschalteten Wärmetauscherstufen dient, Patentansprüche 12 und 13. Auch ist es zur Ausnutzung der Wasserdampfwärme nach Patentanspruch 14 möglich, Wasserdampf der vorletzten Wärmetauscherstufe bei gleichem Druck zur Beheizung der letzten Wärmetauscherstufe zu nutzen. Für diese Alternative wird die in der vorletzten Wärmetauscherstufe gewonnene Sole vor Eintritt in die letzte Wärmetauscherstufe auf einen niedrigeren Druck entspannt, um be der vorliegenden Wasserdampftemperatur in der letzten Wärmetauscherstufe eine weitere Verdampfung der Sole zu erreichen. Sind zur Teilverdampfung des Wassers mehrere Wärmetauscherstufen vorgesehen, so ist es zweckmäßig, nach jeder Wärmetauscherstufe den gebildeten Wasserdampf abzuziehen und ihn ggf. gemeinsam mit weiteren in den Wärmetauscherstufen erzeugten Wasserdampf als Heizmittel einzusetzen. Soll in mehreren Wärmetauscherstufen erzeugter Wasserdampf komprimiert werden, so ist es zweckmäßig, den Wasserdampf vor seiner Kompression zusammenzuführen, Patentanspruch 15.

Das neben den Salzen als Produkt des Verfahrens gebildete Reinwasserkondensat wird aus allen Wärmetauschern zusammengeführt, Patentanspruch 16. Das gewonnene Reinwasser ist als Brauch- oder Trinkwasser verwertbar. Nachfolgend wird das erfindungsgemäß Verfahren und die zum Gegenstand der Erfindung gehörende Vorrichtung zur Durchführung dieses Verfahrens anhand von Ausführungsbeispielen näher erläutert. Die Zeichnung zeigt im einzelnen:

Figur 1      Anlage zur Reinwasser- und Salzgewinnung mit Teilverdampfung und Solegewinnung in mehreren Wärmetauscherstufen;

Figur 2      Anlage mit mehreren Wärmetauscherstufen zur Teilverdampfung, wobei Wasserdampf und Sole in den beiden letzten Wärmetauscherstufen getrennt werden;

Figur 3      Anlage mit mehreren Wärmetauscherstufen zur Teilverdampfung und Solegewinnung mit Wasserdampfabscheidung nach jeder Wasserdampf bildenden Wärmetauscherstufe;

Figur 4    Anlage mit mehreren Wärmetauscherstufen zur Teilverdampfung und Solegewinnung mit gesonderten Wasserdampfkompressoren für den in der letzten und vorletzten Wärmetauscherstufe erzeugten Wasserdampf;

Figur 5    Daten für die Durchführung des Verfahrens für eine Anlage zur Gewinnung von Reinwasser und Salz nach Figur 1, Ausführungsbeispiel 1a;

Figur 6    Daten für die Durchführung des Verfahrens für eine Anlage nach Figur 1, Ausführungsbeispiel 1b;

Figur 7    Daten für die Durchführung des Verfahrens für eine Anlage zur Gewinnung von Reinwasser und Salz nach Figur 2, Ausführungsbeispiel 2.

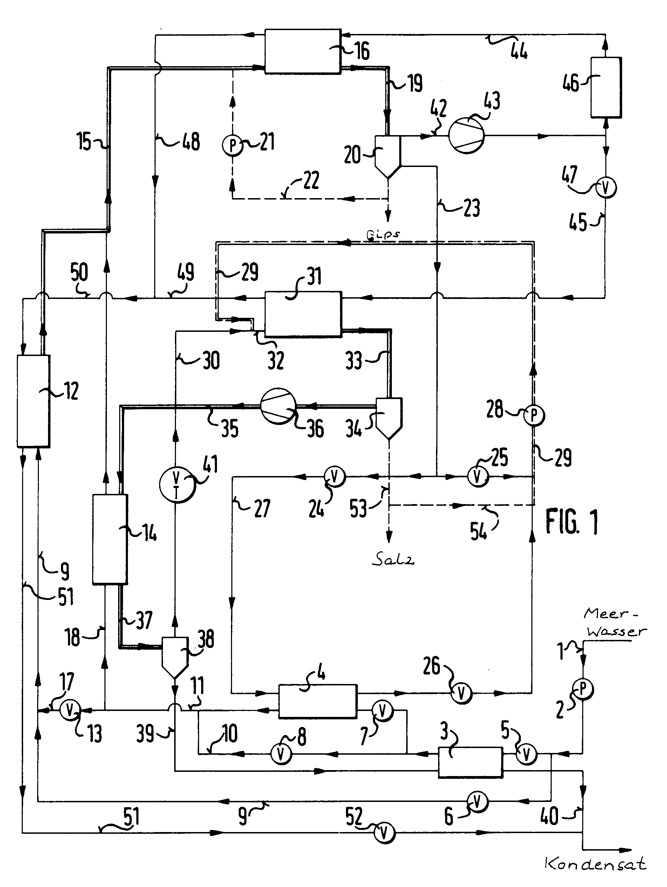

In Figur 1 ist ein Fließbild einer Anlage zur Reinwasser- und Salzgewinnung aus Meerwasser wiedergegeben. Das zu verarbeitende Meerwasser wird über einen Zufluß 1 von einer Pumpe 2 in die Anlage gesaugt und in Wärmetauschern 3, 4 vorgewärmt. Über Ventile 5, 6, 7, 8 sind die Meerwassermengen steuerbar, die die Wärmetauscher durchströmen. Die Ventile sind in parallel zu den Wärmetauschern geschalteten Meerwasserleitungen 9, 10, 11 eingesetzt. Ein Teil des im Wärmetauscher 3 erwärmten Meerwassers läßt sich somit führen, ohne den Wärmetauscher 4 zu durchströmen. Bei geöffnetem Ventil 6 fließt ein Teil des Meerwassers über die Meerwasserleitung 9 direkt zum Wärmetauscher 12, in dem bereits eine Teilverdampfung des Meerwassers stattfindet.

Das von den Wärmetauschern 3, 4 vorgewärmte Meerwasser durchströmt bei geschlossenem Ventil 13 zur weiteren Vorwärmung noch einen Wärmetauscher 14, bevor es zusammen mit dem im Wärmetauscher 12 abströmendem Wasserdampf/Sole-Gemisch in einer Sammelleitung 15 zum Wärmetauscher 16 geführt wird. Das Ventil 13 ist in einem Bypass 17 zwischen Zuleitung 18 zum Wärmetauscher 14 und Meerwasserleitung 9 eingesetzt, die zum Wärmetauscher 12 führt. Über das Ventil 13 läßt sich die zum Wärmetauscher 14 strömende Meerwassermenge regulieren.

Im Wärmetauscher 16 findet in der in Figur 1 gezeigten Anlage die Teilverdampfung des zugeführten Meerwassers bis auf einen vorgegebenen Wert, beispielsweise bis zu 90 % der Wassermenge statt. Der gebildete Wasserdampf wird zusammen mit der erzeugten Sole über die sole- und wasserdampfführende Wasserdampf/Sole-Leitung 19 zu einem Abscheider 20 geführt, in dem Sole und Wasserdampf voneinander getrennt werden. Im Abscheider 20 wird in der Anlage nach Figur 1 - neben Sole und Wasserdampf - im Ausführungsbeispiel eingesetzter Gips abgeschieden, der als Schlamm mittels einer Förderpumpe 21, die den Gips in einer Rückführleitung 22 im Kreislauf fördert und in die Sammelleitung 15 pumpt, in der der Gips mit dem Meerwasser noch vor Eintritt in den Wärmetauscher 16 vermischt wird, um Verkrustungsbildungen im Wärmetauscher 16 zu vermeiden. Der Gips verhindert, daß sich zur Verkrustung neigende Salze an den Rohrwänden des Wärmetauschers niederschlagen. Statt Gips lassen sich auch andere Salze zugeben, die Inkrustationsbildnern entsprechen, die vom Meerwasser mitgeführt werden zugeben. Bei solchen Salzen handelt es sich in erster Linie um $CaCO_3$.

Im Abscheider 20 vom Wasserdampf getrennte Sole wird in einem Soleabfluß 23 weitergeführt. Die Sole läßt sich durch entsprechende Einstellung von Ventilen 24, 25, 26 über eine Solezweigleitung 27 zumindest teilweise als Heizmedium zum Wärmetauscher 4 führen, bevor sie von einer Solepumpe 28 über eine Solezuführung 29 in einen Schleppgasstrom eingesprüht wird. Der Schleppgasstrom strömt in einer Schleppgasleitung 30 zu einem Verdampfer 31, in dem die vom Schleppgas mitgeführte Sole verdampft und der gebildete Wasserdampf überhitzt wird. Als Schleppgas wird im Ausführungsbeispiel trockene Luft eingesetzt, es lassen sich jedoch statt Luft auch andere Gase verwenden, die mit dem Wasserdampf und den zu gewinnenden Salzprodukten chemisch nicht reagieren, sich also bezüglich der in der Anlage zu gewinnenden Produkte inert verhalten, wie zum Beispiel Argon, Stickstoff, Helium, $CO_2$.

Die Solezuführung 29 mündet in einer Einrichtung 32 zur feinen Verteilung der Sole im Schleppgas. Im Ausführungsbeispiel wird als Einrichtung zur feinen Verteilung eine Sprühdüse verwendet, die in der Schleppgasleitung 30 vor dem Verdampfer 31 oder unmittelbar an der Mündungsstelle der Schleppgasleitung in den Verdampfer eingesetzt ist. Im Verdampfer 31 werden beim Überhitzen des Wasserdampfes je nach Partialdruckeinstellung des Schleppgases im entstehenden Schleppgas/Wasserdampf-Gemisch trockene Salze oder Hydrathe gebildet. Sie werden im Schleppgas/Wasserdampf-Gemisch in einer Förderleitung 33 zum Salzabscheider 34 geführt und hier als Produkt vom Schleppgas/Wasserdampf-Gemisch abgetrennt. Das Schleppgas/Wasserdampf-Gemisch wird in einer Schleppgas/Wasserdampf-Leitung 35 von einem Fördergebläse 36 zum Wärmetauscher 14 gefördert, in dem der Wasserdampf im Schleppgas/Wasserdampf-Gemisch unter Wärmeabgabe an das den Wärmetauscher 14 durchströmende Meerwasser kondensiert wird. Das Kondensat strömt in einer Schleppgas/Kondensat-Leitung 37 zu einem Kondensatabscheider 38, der Schleppgas und Kondensat trennt und das dabei gewonnene Reinwasser über eine Kondensatleitung 39 abführt, die zur weiteren Abkühlung des Kondensats wärmeträgerseitig am Wärmetauscher 3 angeschlossen ist. Das Reinwasser wird über eine Wasserleitung 40 zu Trinkwasser- oder Brauchwasserspeichern geführt, die in Figur 1 nicht dargestellt sind.

Das im Kondensatabscheider 38 vom Kondensat getrennte Schleppgas wird über eine Drossel 41 entspannt und in der Schleppgasleitung 30 im Kreislauf zur Zugabe von Sole über die Einrichtung 32 vor dem Verdampfer 31 zurückgeführt.

Der Wasserdampf, der vom Abscheider 20 von der Sole abgetrennt wird, wird über einen Wasserdampfabzug 42 von einem Kompressor 43 angesaugt und komprimiert. Der komprimierte Wasserdampf dient als Heizmittel für Wärmetauscher 16 und Verdampfer 31 und wird zur Wärmeübertragung entweder über eine Wasserdampfleitung 44 wärmeträgerseitig zum Wärmetauscher 16 zur Teilverdampfung des Meerwassers oder über eine Wasserdampfleitung 45 wärmeträgerseitig zum Verdampfer 31 zur Soleverdampfung und Überhitzung des Wasserdampfes abgeführt. Vor Eintritt in den Wärmetauscher 16 ist noch ein Dampferzeuger 46 eingesetzt, der bei Bedarf den Wasserdampf zusätzlich aufheizt, insbesondere aber beim Start der Anlage Wasserdampf bildet. Hierzu weist der Dampferzeuger 46 einen in Figur 1 nicht eingezeichneten Wasserzulauf auf. Die den Wärmetauscher 16 und den Verdampfer 31 durchströmenden Wasserdampfmengen werden über ein Ventil 47 in der Wasserdampfleitung 45 eingestellt. Im Wärmetauscher 16 und im Verdampfer 31 kondensiert der Wasserdampf. Das Kondensat strömt bei Siedetemperatur in Ableitungen 48, 49 aus Wärmetauscher 16 und Verdampfer 31 ab und wird in einer Wasserdampf/Kondensat-Leitung 50 zur weiteren Wärmeabgabe wärmeträgerseitig zum Wärmetauscher 12 geleitet. Vom Wärmetauscher 12 strömt das Kondensat in einer Kondensatleitung 51 zur Wasserleitung 40 und wird nach Druckreduzierung mit Ventil 52 zusammen mit dem übrigen in der Anlage gewonnenen Reinwasser zu den Trink- oder Brauchwasserspeichern geführt.

Das im Salzabscheider 34 gewonnene Salz wird über eine Salzleitung 53 zu in Figur 1 nicht dargestellten Salzspeichern abgezogen. Von der Salzleitung 53 führt eine Salzkeimzufuhr 54 zur Soleleitung 29′. Die Salzkeimzufuhr 54 mündet in die Soleleitung 29′ noch vor der Solepumpe 28, damit die Salzkeime in der Sole möglichst homogen verteilt werden. Die Salzkeime beeinflussen das Ausscheiden und Kornwachstum der sich im Verdampfer 31 bei Überhitzung des Wasserdampf ausbildenden Feststoffpartikeln.

Alle Mengenströme in der Anlage werden über die genannten Ventile so eingestellt, daß die zur Reinwasser- und Salzgewinnung notwendige Energie weitgehendst in der Anlage selbst wieder zurückgewonnen wird. Hierzu dienen vor allem auch die Wärmetauscher 3, 4, 12, in denen einerseits die Wärme der Sole, andererseits die Wärme des erzeugten Kondensats zur Vorwärmung des Meerwassers genutzt werden. Für die Teilverdampfung des Meerwassers dienen die Wärmetauscher 12 und 16 gemeinsam mit den zur Vorwärmung des Meerwassers eingesetzten Wärmetauschern 3, 4, 12 und 14.

Neben der Rückgewinnung der Energie ist es gegenüber der aus DE-OS-33 37 360 bekannten Anlage vorallem von Vorteil, daß der notwendige Kompressionsdruck auf der Wärmeträgerseite des Verdampfers 31 vom Kompressor 43 nicht ausgehend vom vorhandenen Systemdruck im Schleppgas/Wasserdampf-Gemisch und der dann zu überwindenden Druckdifferenz zwischen System- und Kompressionsdruck einzustellen ist, sondern ausgehend vom Druck in der Wasserdampf/Sole-Leitung 19 erreicht werden kann. Der Druck in der Wasserdampf/Sole-Leitung 19 entspricht dem von der Pumpe 2 erzeugten Druck in den Meerwasserleitungen 9, 10, 11, in der Zuleitung 18 und entsprechend in der Sammelleitung 15. Dieser Druck liegt über dem Systemdruck und vermindert somit die vom Kompressor 43 zu überwindende Druckdifferenz gegenüber der Anlage gemäß DE-OS-33 37 360. Auch die vom Fördergebläse 36 zu bewältigende Druckdifferenz ist verhältnismäßig gering, da im wesentlichen nur die beim Fördern des Schleppgas/Wasserdampf-Gemisches auftretenden Druckverluste aufzubringen sind. Bei der erfindungsgemäßen Anlage lassen sich somit in vorteilhafter Weise auch leistungsschwächere Kompressoren und Pumpen einsetzen als bei der vorbekannten Anlage.

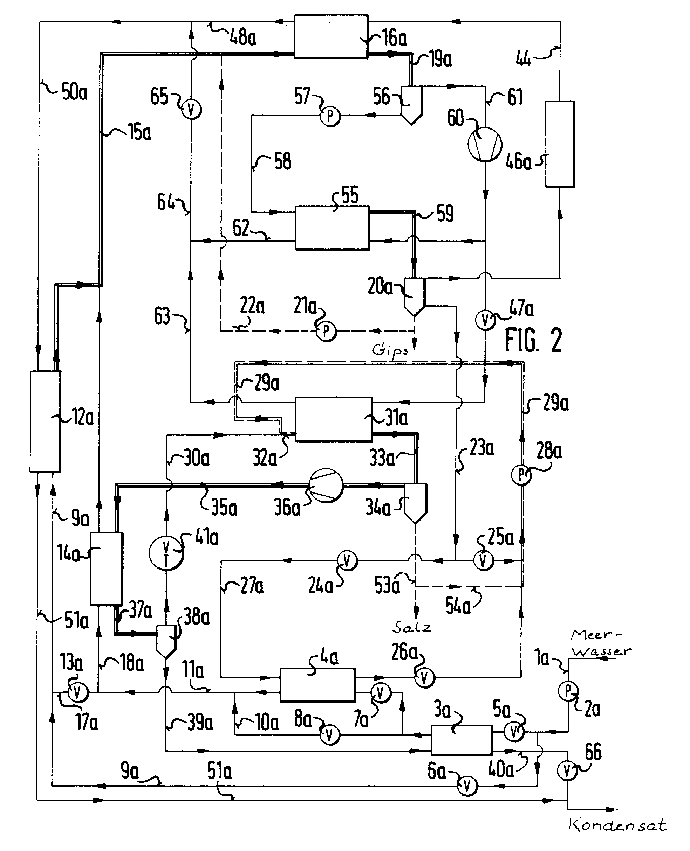

In Figur 2 ist eine Anlage zur Reinwasser- und Salzgewinnung aus Meerwasser wiedergegeben, bei der mehrere Wärmetauscherstufen zur Aufkonzentrierung der Sole vorgesehen sind. Im schematischen Fließbild der Anlage in Figur 2 wurde zur Bezeichung solcher Aggregate der Anlage, die die gleiche technische Funktion aufweisen wie bereits beschriebene Aggregate der Anlage nach Figur 1, die gleiche Nummerierung gewählt. Zum Kennzeichen als Aggregat der Anlage gemäß Figur 2 wurde als Bezugszeichen des Aggregats der jeweiligen Nummer des bereits beschriebenen Aggregats als Index noch der Buchstabe a hinzugefügt. Alle mit der Anlage nach Figur 1 identischen Aggregate sind in Figur 2 somit durch ihren Index a von Aggregaten abgehoben, die hinzukommen und deshalb keinen Index tragen.

In der Anlage nach Figur 2 werden in gleicher Weise wie in der Anlage nach Figur 1 zur Einführung und Vorwärmung des Meerwassers bis zur ersten Dampfbildung im Wärmetauscher 12a die gleichen Aggregate eingesetzt. So wird das Meerwasser im Wärmetauscher 3a von Kondensat aus dem Kondensatabscheider 38a, im Wärmetauscher 4a von im Abscheider 20a gewonnener Sole und im Wärmetauscher 14a vom Schleppgas/Wasserdampf-Gemisch nach Abscheidung der durch Wasserdampfüberhitzung gebildeten Feststoffteilchen im Salzabscheider 34a vorgewärmt. Im Wärmetauscher 16a wird ein Teil des der Anlage zugeführten Meerwassers verdampft und als Heizmedium für diese Verdampfung wärmeträgerseitig Wasserdampf verwendet, der im Abscheider 20a von der Sole getrennt wurde. Vom Abscheider 20a ausgehend durchströmt der Wasserdampf wie bei der Anlage nach Figur 1 zunächst einen Erhitzer 46a, der ggf. als Nacherhitzer, vor allem aber als Wasserdampferzeuger beim Start der Anlage dient. Der Wasserdampf wird abweichend von der Anlage nach Figur 1 jedoch nicht komprimiert, bevor er über eine Wasserdampfleitung 44' zum Wärmeaustausch wärmeträgerseitig in den Wärmetauscher 16a strömt. Das im Wärmetauscher 16a gebildete Kondensat fließt über die Ableitung 48a in die Wasserdampf/Kondensatleitung 50a und nach Wärmeabgabe im Wärmetauscher 12a über die Kondensatleitung 51a und die Wasserleitung 40a aus der Anlage ab. Im Wärmetauscher 14a wird das Schleppgas/Wasserdampf-Gemisch als Heizmedium benutzt.

Bevor das etwa bei Siedetemperatur oder wenig unterhalb der Siedetemperatur in der Sammelleitung 15a strömende Meerwasser in den Wärmetauscher 16a eintritt, wird in gleicher Weise wie bei der Anlage nach Figur 1 über eine Rückführleitung 22a im Abscheider 20a von der Sole getrennter Gips eingeführt, um Verkrustungen in den Rohrleitungen der Wärmetauscher zu vermeiden, die der Teilverdampfung des Meerwassers dienen.

Im Unterschied zur Anlage nach Figur 1 wird bei der Anlage nach Figur 2 der vom Abscheider 20a entnommene Wasserdampf nicht komprimiert, bevor er wärmeträgerseitig den Wärmetauscher 16a durchströmt. Auch sind zur Erzeugung der Sole zwei Wärmetauscherstufen vorgesehen, wobei die erste dieser Stufen vom Wärmetauscher 16a, die zweite Stufe vom Wärmetauscher 55 gebildet wird, der dem Wärmetauscher 16a nachgeschaltet ist. Nach Teilverdampfung im Wärmetauscher 16a wird die über die Wasserdampf/Sole-Leitung 19a zu einem Abscheider 56 geführte Sole vom Wasserdampf getrennt und mittels einer Solepumpe 57 über eine Soleleitung 58 zum Wärmetauscher 55 gepumpt. Im Wärmetauscher 55 findet ein Aufkonzentrieren der Sole statt, bevor sie im Abscheider 20a erneut vom gebildeten Wasserdampf getrennt wird. Vom Wärmetauscher 55 zum Abscheider 20a führt eine Wasserdampf/Sole-Leitung 59.

Vom Abscheider 56 von der Sole getrennter Wasserdampf wird von einem Kompressor 60 über die Ansaugleitung 61 abgezogen und komprimiert. Der komprimierte Wasserdampf dient bei der Anlage nach Figur 2 als Heizmedium für Wärmetauscher 55 und Verdampfer 31a. Die Wasserdampfmenge, die Wärmetauscher und Verdampfer durchströmt, wird mit einem Durchflußregler 47a eingestellt. In beiden vorgenannten Aggregaten, im Wärmetauscher 55 und im Verdampfer 31a wird der Wasserdampf bis zur Kondensation abgekühlt und über Abflüsse 62, 63 von Wärmetauscher und Verdampfer zu einer gemeinsamen Kondensatleitung 64 geführt. Der Wasserdampf wird in der Kondensatleitung 64 über ein Entspannungsventil 65 entspannt und zusammen mit dem aus dem Wärmetauscher 16a abströmenden Kondensat in der Wasserdampf/Kondensat-Leitung 50a, die nach Zuführen der entspannten Kondensatmenge aus der Kondensatleitung 64 Siedewasser führt, zum Wärmetauscher 12a geleitet.

Wegen der Druckreduzierung über das Entspannungsventil 65 und des somit entsprechend niedrigen Druckes in der Kondensatleitung 51a bedarf es in dieser Leitung keiner weiteren Druckentlastung vor Einführung des Kondensats in die Wasserleitung 40a. In der Anlage nach Figur 2 ist vielmehr eine Druckreduzierung für das in der Wasserleitung 40a strömende Kondensat über ein Druckreduzierungsventil 66 erforderlich.

Die Abweichungen zwischen den Anlagen nach Figur 1 und 2 seien im folgenden nochmals zusammengefaßt:

Zunächst ist ein zusätzlicher Wärmetauscher 55 zur weiteren Aufkonzentrierung der im Wärmetauscher 16a gebildeten Sole eingesetzt. Des weiteren wird der vor dem Wärmetauscher 55 im Abscheider 56 abgeschiedene Wasserdampf komprimiert und als Heizmedium einerseits im Wärmetauscher 55, andererseits im Verdampfer 31a zur Erhitzung des Schleppgas/Sole-Gemisches genutzt. Der im Abscheider 56 abgeschiedene und komprimierte Wasserdampf durchströmt somit wärmeträgerseitig sowohl den Verdampfer 31a, als auch den Wärmetauscher 55. Ein weiterer Unterschied besteht wärmeträgerseitig bei den Wärmetauschern 16a und 12a: Der Wasserdampf durchströmt die Wärmetauscher auf niedrigem Druckniveau. Diese Ausgestaltung der Anlage nach Figur 2 erlaubt eine bessere Wärmeausnutzung des bei der Teilverdampfung und der Soleerzeugung aus dem Meerwasser gewonnenen Wasserdampfes.

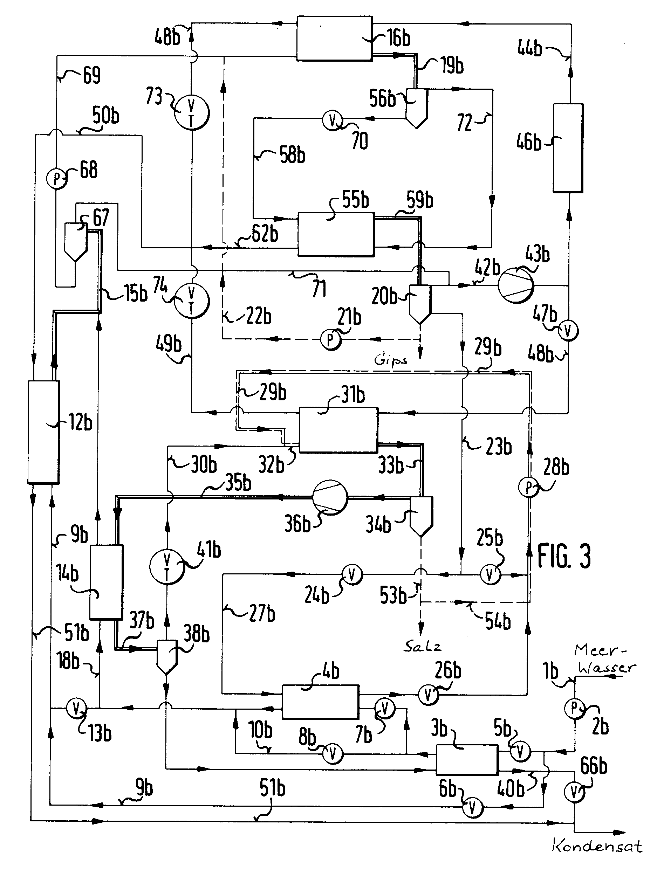

Figur 3 zeigt ein Fleißbild einer Reinwasser- und Salzgewinnungsanlage aus Meerwasser, bei der Wasserdampf nach jedem Wärmetauscher abgezogen wird, in dem bei der Teilverdampfung des Meerwassers und Soleerzeugung Wasserdampf gebildet wird. In Figur 3 sind wieder alle Aggregate, die in ihrer Funktion Aggregaten der Anlagen nach Figuren 1 und 2 entsprechen, mit gleicher Nummer, jedoch zur Kennzeichnung als Aggregate der Anlage nach Figur 3 mit Index b bezeichnet. In der Anlage nach Figur 3 ergänzte Aggregate tragen wieder Bezugszeichen ohne einen Index.

Von der Anlage nach Figur 2 hebt sich die Anlage nach Figur 3 zunächst durch den zusätzlichen Abscheider 67 ab, der den Wärmetauschern 12b und 14b nachgeschaltet ist, um in der Sammelleitung 15b vorhandenen Wasserdampf von erster, noch wenig konzentrierter Sole abzutrennen. Die sich im Abscheider 67 sammelnde Sole wird von einer Solepumpe 68 abgesaugt und in einer Soleleitung 69 zum Wärmetauscher 16b geführt. Die Sole wird im Wärmetauscher 16b weiter verdampft und fließt nach Abtrennung des dabei gebildeten Wasserdampfes vom Abscheider 56b zum Wärmetauscher 55b. Im Unterschied zur Anlage nach Figur 2 wird die Sole vor wärmeseitigem Eintritt in den Wärmetauscher 55b aber nicht auf einen höheren Druck gebracht, sondern im Gegenteil über ein Druckreduzierventil 70 entspannt.

Der Wärmetauscher 55b bildet die letzte Wärmetauscherstufe zur Teilverdampfung des Meerwassers und zum Aufkonzentrieren der Sole. Die Sole wird vom Wasserdampf im Abscheider 20b getrennt. Sie durchströmt zumindest teilweise über den Soleabfluß 23b und die Solezweigleitung 27b wärmeträgerseitig den Wärmetauscher 4b zur Vorwärmung von der Anlage zugeführte Meerwasser und wird nach Einleiten von Salzkeimen über die Salzkeimzugabe 54b mittels der Solepumpe 28b zur Einrichtung 32b gepumpt und in den Schleppgasstrom versprüht. Das auf diese Weise gebildete Schleppgas/Sole-Gemisch wird im Verdampfer 31b verdampft und überhitzt, so daß sich die im Meerwasser gelösten Stoffe als Feststoffpartikeln absetzen, die im Salzabscheider 34b gewonnen werden. Das von den Feststoffpartikeln gereinigte Schleppgas/Wasserdampf-Gemisch strömt gefördert vom Fördergebläse 36b über die Schleppgas/Wasserdampf-Leitung 35b zum Wärmeübertrager 14b ab. Im Wärmeübertrager 14b wird der Wasserdampf unter Wärmeabgabe an das vorzuwärmende Meerwasser kondensiert und als Kondensat im Abscheider 38b vom Schleppgas getrennt. Das Schleppgas wird nach Druckreduzierung in der Drossel 41b in der Schleppgasleitung 30b zur Aufgabe von Sole zum Verdampfer 31b im Kreislauf zurückgeführt.

Neben dem zusätzlichen Abscheider 67, der den Wärmetauschern 12b und 14b nachgeschaltet ist, unterscheidet sich die Anlage gemäß Figur 3 von den Anlagen nach Figuren 1 und 2 durch eine Variation bei Beheizung der Wärmetauscher 16b, 55b und des Verdampfers 31b. Zwar werden der Wärmetauscher 16b und der Verdampfer 31b wieder wie bei der Anlage nach Figur 1 von Wasserdampf erhitzt, der vom Abscheider 20b abgezogen und vom Kompressor 43b komprimiert wird. Zusätzlich zu dem vom Abscheider 20b abziehenden Wasserdampf wird vom Kompressor 43b jedoch auch der im Abscheider 67 abgetrennte Wasserdampf über eine Wasserdampfleitung 71 angesaugt.

Der Wärmetauscher 55b wird bei der Anlage nach Figur 3 von Wasserdampf erwärmt, der im Abscheider 56b von der im Wärmetauscher 16b gebildeten Sole abgeschieden wird. Der Wasserdampf wird ohne Druckerhöhung über eine Wasserdampfleitung 72 wärmeträgerseitig in den Wärmetauscher 55b eingeführt. Um im Wärmetauscher 55b auch ohne Druckerhöhung ein ausreichendes Temperaturgefälle zur Verdampfung der Sole zu erhalten, wird die als Wärmeträger dienende, vom Abscheider 56b abströmende Sole vor Eintritt in den Wärmetauscher mittels des Druckreduzierventils 70 entspannt.

Das in den Wärmetauschern 16b und 55b sowie im Verdampfer 31b wärmeträgerseitig beim Abkühlen des Wasserdampfes gebildete Kondensat wird in der Anlage nach Figur 3 wie schon in der Anlage nach Figur 2 in einer Wasserdampf/Kondensat-Leitung 50b zusammengeführt. Bei der Anlage nach Figur 3 ist es hierzu jedoch erforderlich, das in den Ableitungen 48b, 49b strömende Kondensat über Drosseln 73, 74 zu entspannen, ehe das Kondensat mit dem vom Abfluß 62b abfließenden Kondensat vereinigt wird. Bei der Entspannung des Kondensats entsteht Wasserdampf, in der Wasserdampf/Kondensat-Leitung 50b herrscht wieder Siedezustand. Das siedende Wasser strömt als Heizmedium zum Wärmetauscher 12b und wird dort unter die Kondensationstemperatur abgekühlt. Das gebildete Kondensat strömt in der Kondensatleitung 51b ab. Es wird mit dem vom Wärmetauscher 3b abfließenden Kondensat zusammengeführt. Letzteres ist zuvor wie bei der Anlage nach Figur 2 mittels Druckreduzierventil 66b zu entspannen.

Die Anlage nach Figur 3 unterscheidet sich von den vorbeschriebenen Anlagen somit einerseits durch den zusätzlischen Abscheider 67 nach der ersten Teilverdampfung des Meerwassers im Wärmetauscher 12b sowie durch den Wärmeaustausch im Wärmetauscher 55b auf niedrigem Druckniveau. Beide den Wärmetauscher durchströmenden Medien, also sowohl der als Wärmeträger dienende Wasserdampf, als auch die zu verdampfende Sole befinden sich auf einem niedrigeren Druck, als dies beim Wärmetauscher 55 in der Anlage nach Figur 2 der Fall ist.

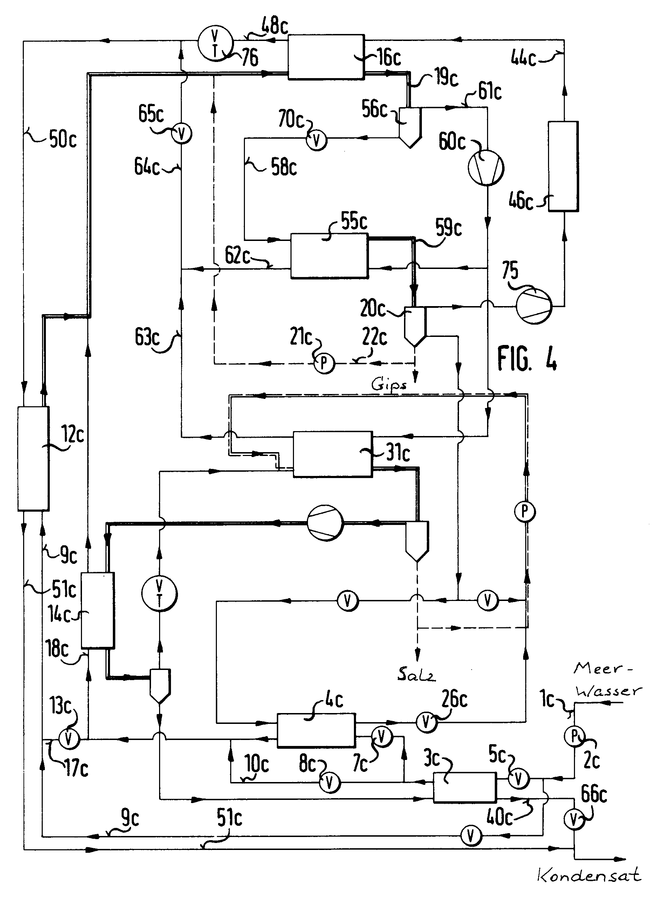

In Figur 4 ist eine Anlage zur Meerwasserentsalzung gezeigt, die hinsichtlich der Wärmeausnutzung des entstehenden Wasserdampfes bei der mehrstufigen Teilverdampfung die Merkmale der Anlagen nach Figuren 2 und 3 miteinander kombiniert. In Figur 4 sind wieder alle Aggregate, die in anderen Anlagen bereits eingesetzt waren, mit gleicher Nummer, jedoch zur Kennzeichnung ihrer Zugehörigkeit zur Anlage gemäß Figur 4 mit Index c versehen.

Während bei der Anlage nach Figur 2 die vom Abscheider 56 abgeführte Sole mittels einer Solepumpe 57 abgepumpt und bei höherem Druckniveau den Wärmetauscher 55 durchströmt, und während der in diesem Wärmetauscher bei weiterer Soleverdampfer gebildete Wasserdampf bei gleichbleibendem Druckniveau nach Abtrennung von der Sole im Abscheider 20a zum Wärmetauscher 16a geführt wird, ist bei der Anlage nach Figur 4 für die vom Abscheider 56c entnommene Sole eine Entspannung über ein Druckreduzierventil 70c wie bei der Anlage nach Figur 3 vorgesehen und der bei diesem Druckniveau im Abscheider 20c gewonnene Wasserdampf wird über einen Kompressor 75 komprimiert, ehe der Wasserdampf über eine Wasserdampfleitung 44c wärmeträgerseitig in den Wärmetauscher 16c eingeführt wird. Die Kompressoren 75 und 60c, letzterer entspricht in seiner Funktion dem Kompressor 60 der Anlage nach Figur 2, erzeugen Enddrücke von unterschiedlicher Höhe. Es ist somit vor Zusammenführen der Kondensate, die von den Wärmetauschern 16c und 55c sowie vom Verdampfer 31c abströmen, eine Entspannung notwendig. Hierzu dienen in der Anlage nach Figur 4 das Entspannungsventil 65c in der Kondensatleitung 64c und ein in der Ableitung 48c zusätzlich eingesetztes Drosselventil 76. Das Kondensat wird über die beiden vorgenannten Ventile so entspannt, daß in der Wasserdampf/Kondensat-Leitung 50c wieder Siedezustand herrscht.

Auch in der Anlage nach Figur 4 wird die bei der notwendigen Verdampfung des Meerwassers erzeugte Wärme optimal ausgenutzt, wobei durch Einsatz von zwei Kompressoren ein mittleres Druckniveau in den Anlageteilen erzeugt wird, die den bei der Teilverdampfung des Meerwassers gewonnenen Wasserdampf als Wärmeträger zu den Wärmetauschern und zum Verdampfer führen. Dies erspart den Einsatz von teueren Hochdruckaggregaten.

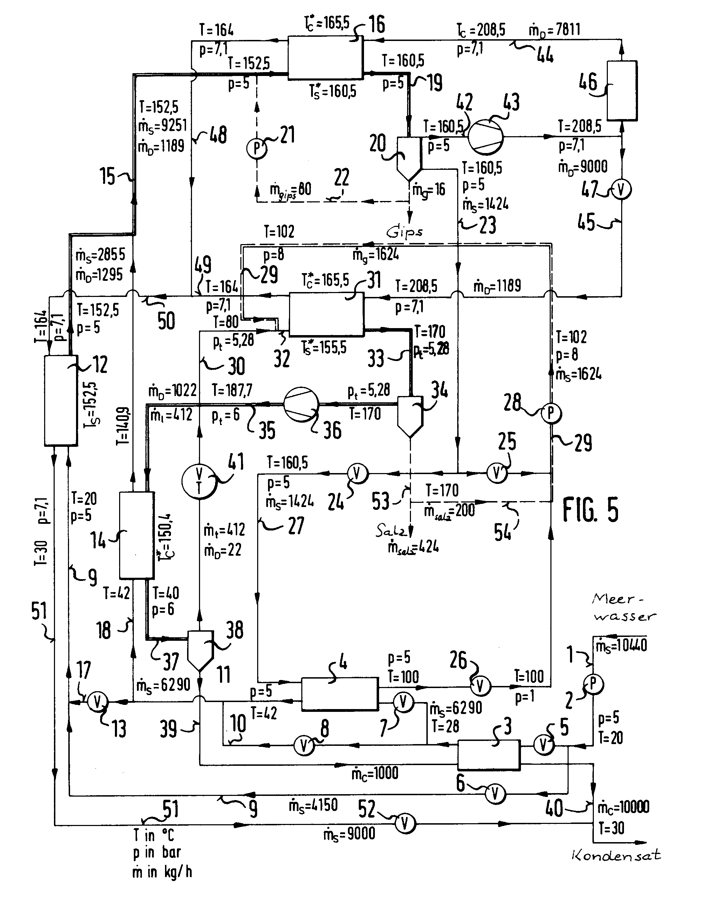

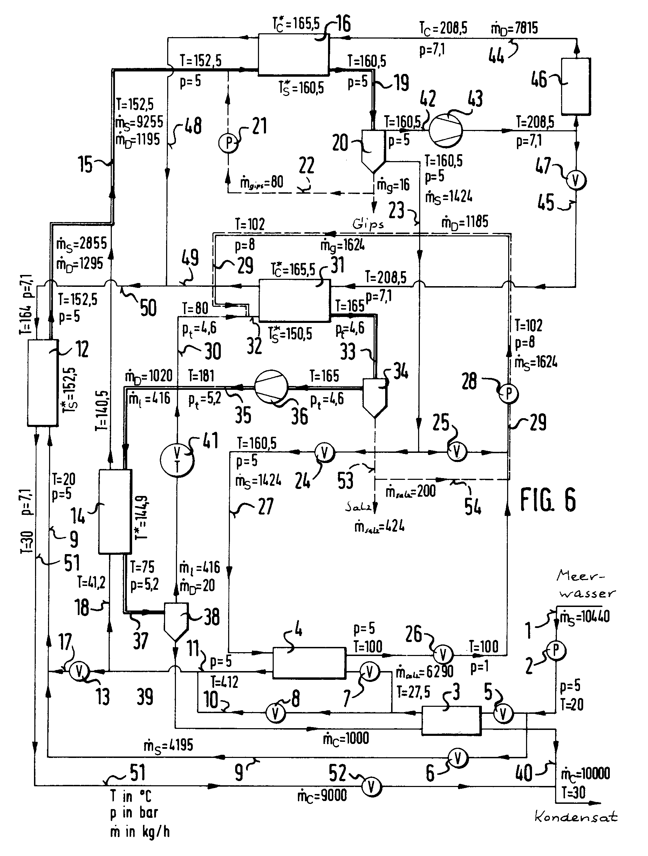

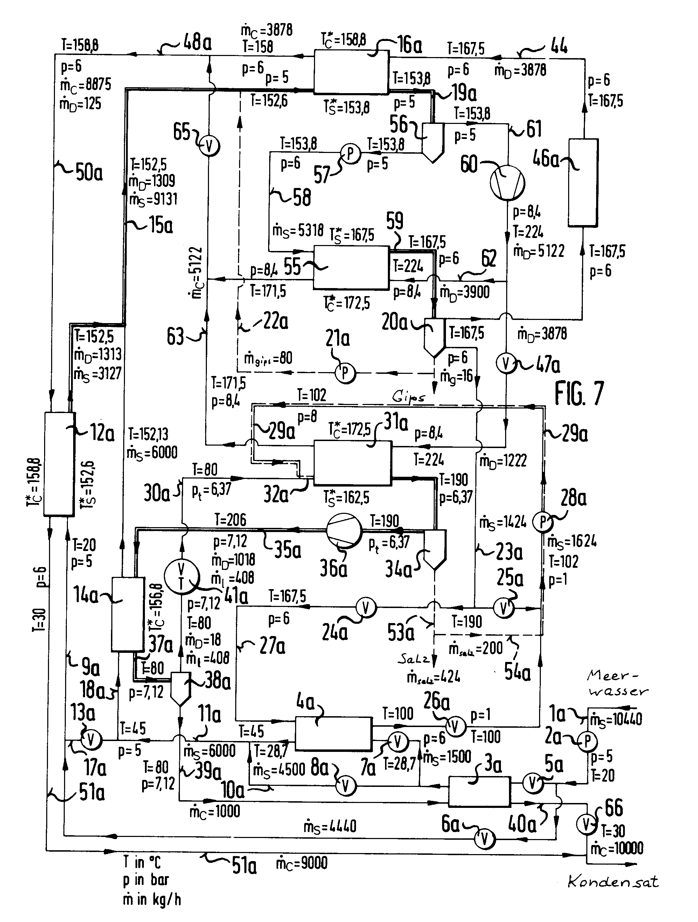

Ausführungsbeispiele mit Betriebsdaten zur Durchführung des Verfahrens sind in Figuren 5, 6 und 7 wiedergegeben. Bei Figuren 5 und 6 handelt es sich jeweils um eine Anlage der in Figur 1 gezeigten Art, bei Figur 7 um eine Anlage gemäß Figur 2. In allen Figuren 5, 6 und 7 sind die Stoffströme innerhalb der Anlagen durch Pfeile markiert und durch Durchflußmenge $\dot{m}$ in kg/h, durch Druck P in bar und Temperatur T in °C gekennzeichnet. Die Daten der Stoffströme sind jeweils am zutreffenden Leitungsstrang eingetragen, wobei die Durchflußmengen jeweils zu Beginn oder bei Entnahme auch am Ende eines Leitungsstranges angegeben sind. Die Stoffströme sind durch zusätzliche Indices voneinander unterschieden. So wird für Meerwasser und Sole als Index "S", für Wasserdampf als Index "D", für Kondensat als Index "C", für das Schleppgas/Wasserdampf-Gemisch als Index "GD" bzw. "L" für Schleppgas, "D" für Wasserdampf und für Salz als Index "Salz" verwendet.

Die Temperaturangaben an solchen Wärmetauschern, in denen das Meerwasser bei Siedetemperatur $T_s^*$ ($T_s^*$ = Siedetemperatur des salzhaltigen Wassers in seinem Zustand am Austritt des jeweiligen Wärmetauschers) verdampft oder Wasserdampf wärmeträgerseitig bei konstanter Kondensationstemperatur $T_c^*$ ($T_c^*$ = Kondensationstemperatur des Wasserdampfs) kondensiert, entsprechen der jeweils bei entsprechendem Druck gegebenen Siede-bzw. Kondensationstemperatur. Die Temperaturänderung in den Wärmetauschern für den jeweiligen Stoff ergibt sich aus der Differenz zwischen den angegebenen Eingangs- und Ausgangstemperaturen an den Wärmetauschern.

Das gleiche gilt für die Verdampfer in den Ausführungsbeispielen nach Figuren 5, 6 und 7. Es ist zum einen die Siedetemperatur $T_s^*$ der Sole im Schleppgas/Sole-Gemisch (in Figur 5 beispielsweise $T_s^*$ = 155,5°C) angegeben, zum anderen die Ausgangstemperatur des Schleppgas/Wasserdampf-Gemisches, aus der sich die Überhitzung des Wasserdampfs im Schleppgas/Wasserdampf-Gemisch ergibt (in Figur 5 beispielsweise $T_{GD}$ = 170°C). Der wärmeträgerseitig eintretende Wasserdampf (in Figur 5 $T_D$ = 208°C) kondensiert im Verdampfer (in Figur 5 bei $T_c^*$ = 165,5°C) und tritt als Kondensat mit einer unterhalb der Kondensationstemperatur liegenden Temperatur aus (in Figur 5 beispielsweise mit $T_c^*$ = 164°C).

Der jeweilige Druck in den Aggregaten und Leitungen der Anlage ist in den Figuren 5, 6 und 7 jeweils hinter Kompressoren oder Pumpen angegeben. Der Druck entspricht jeweils dem Betriebsdruck, bei Gasgemischen also dem Systemdruck $P_t$. Der hinter den Kompressoren und Pumpen angegebene Druck gilt dann für den gesamten folgenden Anlagenbereich, es sei denn, der Druck wird durch Entspannungsventile oder Drosseln reduziert. Der dann folgende Druck ist hinter den Ventilen oder Drosseln angegeben.

So wird beispielsweise im Ausführungsbeispiel nach Figur 5 das Meerwasser von der Wasserpumpe 2 mit einem Druck $P_S$ = 5 bar in die Anlage gepumpt. Dieser Druck gilt für den gesamten Anlagenbereich, in dem das Meerwasser teilverdampft und die Sole erzeugt wird. Der aus diesem Anlagenbereich vom Abscheider 20 abgetrennte Wasserdampf wird dann vom Kompressor 43 auf einen Druck von $P_D$ = 7,1 bar gebracht und unter diesem Druck wärmeträgerseitig zum Wärmetauscher 16 und zum Verdampfer 31 gedrückt. Das bei diesem Druck gebildete Kondensat wird entspannt, ehe es mit dem übrigen in der Anlage gewonnenen Kondensat zusammengeführt wird. Zur Entspannung des Kondensats dient das Entspannungsventil 52.

Die in Figuren 5, 6 und 7 angegebenen Temperaturen und die angeführten Drucke berücksichtigen auftretende Wärmeverluste oder Druckverluste in den Anlagen beim Stofftransport nicht. Bei entsprechender Isolation und Auslegung der Anlagen sind solche Verluste jedoch von geringerer Bedeutung.

Im Ausführungsbeispiel nach Figur 5 wird in den Schleppgaskreislauf eine Solemenge von $\dot{m}_S$ = 1.624 kg/h eingeführt. Diese Solemenge führt im späteren Schleppgas/Wasserdampf-Gemisch zu einem Partialdruckverhältnis $P_{Sch}/P_t$ = 0,2. Bei diesem Partialdruckverhältnis und dem herrschenden Systemdruck $P_t$ = 5,28 bar ergibt sich für die Sole im Schleppgas/Sole-Gemisch eine Siedetemperatur $T_S^*$ = 155,5°C. Dabei ist berücksichtigt, daß die Sole durch die Teilverdampfung des Meerwassers auf 10 % der gesamten zugeführten Meerwassermenge konzentriert ist und einen entsprechenden Salzgehalt aufweist, der zu einer Siedepunkterhöhung um 10°C führt (die Siedetemperatur reinen Wassers bei $p_t$ = 5,28 bar beträgt $T_s$ = 145,5°C).

Das von den Feststoffteilchen befreite Schleppgas/Wasserdampf-Gemisch wird vom Abscheider 34 vom Fördergebläse 36 abgesaugt und auf einen Systemdruck $P_t$ = 6 bar gebracht. Der Systemdruck $P_t$ = 6 bar wird beim Befüllen des Schleppgaskreislaufes eingestellt. Über eine Pumpe oder aus einem Druckluftspeicher wird in die Anlage Luft bis zu einem Druck von 6 bar eingeführt. Mit diesem Druck durchströmt dann auch das Schleppgas/Wasserdampf-Gemisch den Wärmetauscher 14, in dem der Wasserdampf des Schleppgas/Wasserdampf-Gemisches bei einer Temperatur von $T_c^*$ = 150,4°C kondensiert. Das im Abscheider 38 vom Kondensat getrennte Schleppgas wird von der Drossel 41 wieder auf den Systemdruck $p_t$ = 5,28 bar entspannt. Im Abscheider 38 wird Kondensat mit einer Durchflußmenge $\dot{m}_C$ = 1.000 kg/h gewonnen und mit $P_C$ = 6 bar über den Wärmetauscher 3 zum Ausgang der Anlage geführt.

Die vom Abscheider 20 abgezogene Sole strömt mit einem Druck von $P_S$ = 5 bar durch den Wärmetauscher 4 und wird vor Zugabe von Salzkeimen über die Salzkeimzugabe 54 über das Ventil 26 auf Normaldruck $P_S$ = 1 bar entspannt. Eine entsprechende Druckreduzierung wird auch mit dem Ventil 25 erreicht. Nach Zugabe der Salzkeime wird die Sole dann von der Solepumpe 28 wieder auf höheren Druck gebracht. Die Sole wird bei einem Druck von $P_S$ = 8 bar zum Eingang des Verdampfers 31 gefördert und dort mittels der Einspritzdüse, die als Einrichtung 32 zur feinen Verteilung der Sole im Schleppgas-Gemisch dient, in das Schleppgas eingespritzt. Der Schleppgasdruck beträgt - wie bereits als Systemdruck $P_t$ erwähnt - $P_t$ = 5,28 bar. Als Salzprodukt wird in der Anlage bei der eingeführten Meerwassermenge von $\dot{m}_S$ = 10.440 kg/h an Salz $\dot{m}_{Salz}$ = 424 kg/h gewonnen. Dabei werden vom Abscheider 34 insgesamt $\dot{m}_{Salz}$ = 624 kg/h abgeschieden. Von dieser Salzmenge werden jedoch $\dot{m}_{Salz}$ = 200 kg/h in die Salzkeimzufuhr 54 als Salzkeime in die Sole zurückgeführt.

Das Ausführungsbeispiel nach Figur 6 unterscheidet sich vom Ausführungsbeispiel nach Figur 5 lediglich im Schleppgaskreislauf. In der Anlage nach Figur 6 ist für des Schleppgas/Sole-Gemisch bzw. für Schleppgas/Wasserdampf-Gemisch ein Systemdruck von $P_t$ = 4,6 bar eingestellt. Bei gleich großer Solemenge von $\dot{m}_S$ = 1,624 kg/h, die vor dem Verdampfer 31 in das Schleppgas eingeführt wird, ergibt sich dann im Schleppgas/Wasserdampf-Gemisch ein Partialdruckverhältnis $P_{Sch}/P_t$ = 0,2. Für die in gleicher Weise wie im Ausführungsbeispiel nach Figur 5 um 90 % der Meerwassermenge eingedampfte Sole ergibt sich eine Siedetemperatur von $T_s^*$ = 150,5°C. Das Schleppgas/Wasserdampf-Gemisch verläßt nach Überhitzung des Wasserdampfes den Verdampfer 31 mit einer Temperatur von $T_{GD}$ = 165°C. Die durch diese Überhitzung des Wasserdampfes gebildeten trockenen Feststoffteilchen im Schleppgas/Wasserdampf-Gemisch werden im Abscheider 34 abgeschieden. Die abgeschiedene Salzmenge entspricht bei gleicher Meerwassermenge der im Ausführungsbeispiel nach Figur 5 gewonnenen Salzmenge.

Das verbleibende Schleppgas/Wasserdampf-Gemisch wird vom Abscheider 34 abgesaugt und vom Fördergebläse 36 auf einen Druck von $P_t$ = 5,2 bar gebracht. Durch diese Kompression des Schleppgas/Wasserdampf-Gemisches steigt im Gemisch die Temperatur auf $T_{GD}$ = 181°C.

Bei einem Systemdruck von $P_t$ = 5,2 bar ergibt sich für den Wasserdampf im Schleppgas/Wasserdampf-Gemisch eine Kondensationstemperatur $T_c^*$ = 144,9°C. Bei dieser Temperatur kondensiert der Wasserdampf im Wärmetauscher 14. Das Kondensat wird im Wärmetauscher 14 noch bis auf eine Temperatur $T_C^* = 75°C$ abgekühlt und im Abscheider 38 vom Schleppgas getrennt. Es wird wie im Ausführungsbeispiel nach Figur 5 eine Kondensatmenge von $\dot{m}_C = 1000$ kg/h gewonnen. Das Schleppgas strömt vom Abscheider 38 im Kreislauf zurück, wobei im Drossel 41 der Druck von $P_t = 5,2$ mbar wieder auf $P_t = 4,6$ bar reduziert wird.

Wegen der etwas niedrigeren Ausgangstemperatur des Kondensats am Abscheider 38 von $T_C = 75°C$ wird das Meerwasser im Wärmetauscher 3 auch weniger erwärmbar als bei der Verfahrensführung nach Figur 5. Dies wird durch eine kleinere Durchflußmenge für das Meerwasser durch den Wärmetauscher 3 und ein geringere Temperaturdifferenz ausgeglichen. Während nach Figur 5 eine Meerwassermenge von $\dot{m}_S = 6290$ kg/h von $T_S = 20°F$ auf $T_S = 28°C$ vorgewärmt werden konnte, wird nach Figur 6 nur eine Meerwassermenge von $\dot{m}_S = 6245$ kg/h von $T_S = 20°C$ auf $T_S = 27,5°C$ erwärmt. Mit dieser Meerwassermenge ergibt sich nach Durchgang des Wärmetauschers 14 jedoch an dessen Ausgang wieder eine Meerwassertemperatur, die nur sehr geringfügig von der Meerwassertemperatur am Ausgang des Wärmetauschers 14 nach Figur 5 abweicht, in Figur 5 wird nämlich das Meerwasser - bei einer Kondensationstemperatur von $T_c^* = 144,9°C$ auf der Kondensationsseite des Wärmetauschers = bis auf eine Temperatur $T_S = 140,9°C$ erwärmt, in Figur 6 - bei einer Kondensationstemperatur von $T_c^* = 150,4°C$ auf der Kondensationsseite - auf eine Temperatur von $T_S = 140,5°C$. Diese Differenzen sind nach Zusammenführen der Teilströme des vorgewärmten Meerwassers hinter den Wärmetauschern 12 und 14 für den thermischen Zustand des Meerwassers am Eingang des Wärmetauschers 16 ohne Einfluß. Wesentlich sind bei einem Vergleich der Ausführungsbeispiele nach Figuren 5 und 6 die Systemdruckdifferenzen im Schleppgaskreislauf: In der Anlage nach Figur 5 herrscht im Schleppgaskreislauf ein Systemdruck $P_t = 6$ bar bzw. nach Entspannung $P_t = 5,28$ bar, in der Anlage nach Figur 6 ein Systemdruck $P_t = 5,2$ bar bzw. $P_t = 4,6$ bar. Bei niedrigerem Systemdruck im Schleppgaskreislauf stehen bei sonst gleichen Parametern in den Wärmetauschern 31 und 14 zur Wärmeübertragung größere Temperaturdifferenzen zur Verfügung, im Ausführungsbeispiel nach Fig. 6 und 5° grd größere Temperaturdifferenzen als im Ausführungsbeispiel nach Figur 5, ohne hierfür bei Betrieb der Anlage mehr Energie zuführen zu müssen.

In Figur 7 sind Betriebsdaten für eine Anlage zur Meerwasserentsalzung nach Figur 2 angegeben. Wenn sich auch die in dieser Anlage stündlich verarbeitete Meerwassermenge von $\dot{m}_S = 10.440$ kg/h und damit die Produktmengen für Reinwasser

von $\dot{m}_C = 10.000$ kg/h und für Salz von $\dot{m}_{Salz} = 424$ kg/h gegenüber den Ausführungsbeispielen nach Figuren 5 und 6 nicht verändert haben, so wird die Anlage doch wirtschaftlicher unter günstigerer Ausnutzung der zur Reinwasser und Salzgewinnung erforderlichen thermischen Energie betrieben.

Das Meerwasser wird von der Wasserpumpe 2a wieder mit $P_S = 5$ bar in die Anlage gepumpt und von gewonnenem Wasserdampf und Kondensat in Wärmetauschern 3a und 12a sowie vom Schleppgas/Wasserdampf-Gemisch im Wärmetauscher 14a und von der Sole im Wärmetauscher 4a soweit vorgewärmt, daß das Meerwasser im Siedezustand bei einer Temperatur von $T_S^* = 152,6°C$ in den Wärmetauscher 16a eintritt. Im Wärmetauscher 16a findet eine 50 %ige Teilverdampfung des Meerwassers statt, dabei gebildeter Wasserdampf und Sole werden im Abscheider 56 voneinander getrennt.

Der Wasserdampf wird vom Abscheider 56 vom Kompressor 60 abgesaugt und auf einen Druck von $P_D = 8,4$ bar komprimiert. Die Temperatur des Wasserdampfes erhöht sich dabei auf $T_D = 224°C$. Von der insgesamt komprimierten Dampfmenge $\dot{m}_D = 5.122$ kg/h werden $\dot{m}_D = 3.900$ kg/h als Heizmedium für den Wärmetauscher 55 verwendet, die restliche Dampfmenge von $\dot{m}_D = 1.222$ kg/h durchströmt zur Erhitzung des Schleppgas/Sole-Gemisches den Verdampfer 31a. Das dabei durch Abkühlen des Wasserdampfs gebildete Kondensat wird im Entspannungsventil 65 entspannt und mit dem von Wärmetauscher 16a kommenden Kondensat zusammengeführt.

Die im Abscheider 56 sich sammelnde Sole wird von der Sole-pumpe 57 abgesaugt und mit einem Druck von $P_S = 6$ bar zum Wärmetauscher 55 gepumpt. Die Sole verdampft hier bei einer Verdampfungstemperatur von $T_s^* = 167,5°C$ bis auf eine Restmenge von $\dot{m}_S = 1.424$ kg/h. Der bei Verdampfung der Sole gebildete Wasserdampf wird mit einer Temperatur $T_D = 167,5°C$ vom Abscheider 56a abgeführt und strömt mit einer Wassermenge von $\dot{m}_D = 3.878$ kg/h zum Wärmetauscher 16a. Der Erhitzer 46a ist im Ausführungsbeispiel nicht in Betrieb, er dient nur als Einrichtung zur Erzeugung von Wasserdampf beim Start der Anlage. Im Wärmetauschers 16a wird der Wasserdampf unter Wärmeabgabe an das teilzuverdampfende Meerwasser bei einer Kondensationstemperatur $T_c^* = 158,8°C$ wieder kondensiert. Zusammen mit der übrigen Kondensatmenge aus dem Wärmetauscher 55 und dem Verdampfer 31a durchströmt das Kondensat in einer Menge von $\dot{m}_C = 8.825$ kg/h und nach Vereinigung und Entspannen des Kondensats von Wärmetauscher 55 und Verdampfer 31a mit Kondensationstemperatur $T_c^* = 158,8°C$ wärmeträgerseitig durch den Wärmetauscher 12a. Aus dem Wärmetauscher 12a fließt das Kondensat mit einer Temperatur von T = 30°C ab.

Die vom Abscheider 20a abgezogene aufkonzentrierte Sole wird bei geschlossenem Ventil 25a vollständig wärmeträgerseitig durch den Wärmetauscher 4a geführt, bei einer Ausgangstemperatur von $T_S$ = 100°C vom Ventil 26 von $P_S$ = 6 bar auf $P_S$ = 1 bar entspannt und schließlich von der Solepumpe 28a mit einem Druck von $P_S$ = 8 bar in den Schleppgasstrom eingeführt. Vor der Pumpe 28a wird in die Sole als Keimbildner wieder Salz zugeführt. Es werden mit einer Temperatur von $T_{Salz}$ = 190°C eine Salzmenge $\dot{m}_{Salz}$ = 200 kg/h zugeführt.

Der Schleppgaskreislauf weist einen Gesamtdruck von $P_t$ = 6,37 bar auf, woraus sich für die in den Schleppgasstrom eingeführte Sole eine Siedetemperatur $T_s^*$ = 152,5°C ergibt. Im Verdampfer 31a wird das durch verdampfende Sole gebildete Schleppgas/Wasserdampf-Gemisch bis auf eine Temperatur von $T_{GD}$ = 190°C überhitzt, so daß sich aus den im Meerwasser gelösten Stoffen Salze als Feststoffteilchen ausscheiden, die im Abscheider 34a vom Schleppgas/Wasserdampf-Gemisch getrennt werden. Das von den Feststoffteilchen gereinigte Schleppgas/ Wasserdampf-Gemisch wird vom Fördergebläse 36a zum Wärmetauscher 14a gepumpt, wobei sich im Schleppgas/Wasserdampf-Gemisch der Druck von $P_{GD}$ = 6,37 bar auf der Saugseite des Fördergebläses bis auf $P_{GD}$ = 7,12 bar auf der Druckseite des Fördergebläses erhöht. Das Schleppgas/Wasserdampf-Gemisch weist hinter dem Fördergebläse eine Temperatur von $T_{GD}$ = 206°C auf und besteht aus $\dot{m}_D$ = 1.018 kg/h Dampf und $m_L$ = 408 kg/h Luft.

Der Wasserdampf im Schleppgas/Wasserdampf-Gemisch kondensiert im Wärmetauscher 14a bei einer Temperatur $T_c^*$ = 156,8°C und wird mit dem Schleppgas unter Wärmeabgabe an das im Wärmetauscher 14a vorzuwärmende Meerwasser bis auf eine Ausgangstemperatur von $T_C$ = 80°C abgekühlt. Vom Ausgang des Wärmetauschers 14a strömen daher ab: als Schleppgas Luft in einer Menge von $\dot{m}_L$ = 408 kg/h, eine Kondensatmenge von $\dot{m}_C$ = 1.000 kg/h sowie noch eine geringe Menge Wasserdampf von $m_D$ = 18 kg/h. Vor Rückführung in den Schleppgaskreislauf wird der Druck des Schleppgas/Wasserdampf-Gemisches von $P_{GD}$ = 7,12 bar von der Drossel 41a wieder auf $P_{GD}$ = 6,37 bar verringert. Bei diesem Druck und bei einer Temperatur von $T_{GD}$ = 80°C wird in den Schleppgasstrom wieder Sole eingesprüht.

Die Betriebsweise der Anlage nach Figur 7 unterscheidet sich somit von den Anlagen nach Figuren 5 und 6 nicht nur durch die zweistufige Solegewinnung und das Abtrennen des in diesen Stufen gebildeten Wasserdampfes, sondern auch durch ein erhöhtes Druckniveau im Schleppgaskreislauf. Eine höhere Kompressionsenergie als im Schleppgaskreislauf wird jedoch bei Kompression des Wasserdampfes im Kompressor 60 notwendig, der den Wasserdampf statt von $P_D$ = 5 bar auf $P_D$ = 7,1 bar in den Ausführungsbeispielen nach Figuren 5 und 6 im Ausführungsbeispiel nach Figur 7 von $P_D$ = 5 bar bis auf $P_D$ = 8,4 bar erhöhen muß. Die Erhöhung der Pumpenleistung an dieser Stelle führt dennoch zu einer günstigeren Energiezufuhr, so daß insgesamt sogar eine Kostenerniedrigung pro kg erzeugtes Reinwasser bzw. Salz erzielt wird.

**Patentansprüche**

1. Verfahren zur Gewinnung reinen Wassers und im Wasser gelöster Stoffe durch Einbringen von die gelösten Stoffe enthaltendem Wasser in feiner Verteilung in einen inerten Schleppgasstrom unter Einstellung eines vorgegebenen Partialdruckes für das Schleppgas im Schleppgas/Wasserdampf-Gemisch, das durch Erhitzen des Schleppgas/Wasser-Gemisches bis zur Verdampfung des Wassers und Überhitzung des erzeugten Wasserdampfes gebildet wird, und anschließender Abscheidung von im Schleppgas/Wasserdampf-Gemisch enthaltener Feststoffpartikeln, Abführen des gereinigten Schleppgas/Wasserdampf-Gemisches und Abkühlung des Gemisches bis zur Kondensation des Wasserdampfes im Schleppgas/Wasserdampf-Gemisch unter Wärmeabgabe an ein bei Durchführung des Verfahrens zu erhitzendes Medium, **dadurch gekennzeichnet,** daß das zu reinigende Wasser zunächst unter Wärmezufuhr teilverdampft wird, und daß durch die Teilverdampfung gebildete Sole in feiner Verteilung in den Schleppgasstrom eingebracht wird, daß der durch die Teilverdampfung gebildete Wasserdampf nach Abscheidung der Sole zumindest teilweise komprimiert und unter Wärmeabgabe einerseits zur Beheizung des Schleppgasstroms nach Zufuhr der Sole zur Einstellung des wassertröpfchenfreien Schleppgas/Wasserdampf-Gemisches und andererseits zur Teilverdampfung des zu reinigenden Wassers dient, und daß das gereinigte Schleppgas/Wasserdampf-Gemisch unter Abkühlung und Kondensation des in ihm enthaltenden Wasserdampfes das zu reinigende Wasser vorwärmt.

2. Verfahren nach Anspruch 1, **dadurch gekennzeichnet,** daß die Teilverdampfung zumindest für einen Teil des zu reinigenden Wassers in mehreren Wärmetauscherstufen erfolgt.

3. Verfahren nach einem der Ansprüche 1 oder 2,
**dadurch gekennzeichnet,**
daß vom Schleppgas/Wasserdampf-Gemisch nur ein Teil des zu reinigenden Wassers vorgewärmt wird, und daß der andere Teil von komprimiertem Wasserdampf unter Ausnutzung von Restwärme erwärmt wird.

4. Verfahren nach einem der Ansprüche 1, 2 oder 3,
**dadurch gekennzeichnet,**
daß das zu reinigende Wasser im Wärmeaustausch mit der Sole vorgewärmt wird, bevor die Sole in das Schleppgas eingebracht wird.

5. Verfahren nach einem der vorhergehenden Ansprüche,
**dadurch gekennzeichnet,**
daß zu reinigende Wasser von aus dem Schleppgas/Wasserdampf-Gemisch abgetrennten Kondensat vorgewärmt wird.

6. Verfahren nach einem der vorhergehenden Ansprüche,
**dadurch gekennzeichnet,**
daß dem zu reinigenden Wasser vor seiner Teilverdampfung Salze zugegeben werden, die der Art von vom Wasser mitgeführten Inkrustationsbildnern entsprechen, und daß die Salze in einer solchen Menge zugegeben werden, daß eine Übersättigung des Wassers, insbesondere eine 10 - 30 %ige Übersättigung hinsichtlich der zugegebenen Salze eintritt, die nach der Teilverdampfung von der erzeugten Sole isoliert werden.

7. Verfahren nach Anspruch 6,
**dadurch gekennzeichnet,**
daß ein Teil der isolierten Salze dem Wasser vor dessen Teilverdampfung wieder zugeführt wird.

8. Verfahren nach einem der vorhergehenden Ansprüche,
**dadurch gekennzeichnet,**
daß das Wasser bei seiner Teilverdampfung abrasive Stoffe enthält.

9. Verfahren nach einem der vorhergehenden Ansprüche,
**dadurch gekennzeichnet,**
daß zur Salzbildung in die bei der Teilverdampfung gewonnene Sole Salzkeime eingeführt werden, insbesondere bis zur 10 - 30 %igen Übersättigung der Sole.

10. Verfahren nach Anspruch 9,
**dadurch gekennzeichnet,**
daß die Salzkeime vor Eintritt der Sole in eine die Sole fördernde Solepumpe zugegeben werden.

11. Verfahren nach einem vorhergehenden Ansprüche,
**dadurch gekennzeichnet,**
daß bei Teilverdampfung des zu reinigenden Wassers in mehreren Wärmetauscherstufen gebildeter Dampf der letzten und vorletzten Wärmetauscherstufe entnommen wird.

12. Verfahren nach Anspruch 11,
**dadurch gekennzeichnet,**
daß die Sole in der letzten Wärmetauscherstufe mit in der vorletzten Wärmetauscherstufe gebildetem Wasserdampf erhitzt wird.

13. Verfahren nach einem der Ansprüche 11 oder 12,
**dadurch gekennzeichnet,**
daß in der letzten Wärmetauscherstufe gebildeter Wasserdampf zur Beheizung einer vorgeschalteten Wärmetauscherstufe dient.

14. Verfahren nach einem der Ansprüche 11, 12 oder 13,
**dadurch gekennzeichnet,**
daß aus der vorletzten Wärmetauscherstufe strömender Wasserdampf bei gleichbleibendem Druck als Heizmedium die letzte Wärmetauscherstufe durchströmt, und daß die in der vorletzten Wärmetauscherstufe gewonnene Sole vor Eintritt in die letzte Wärmetauscherstufe entspannt wird.

15. Verfahren nach einem der Ansprüche 11 bis 14,
**dadurch gekennzeichnet,**
daß in den Wärmetauscherstufen gebildeter Wasserdampf zumindest zu einem Teil mit zu komprimierendem Wasserdampf vor dessen Kompression zusammengeführt wird.

16. Verfahren nach einem der vorhergehenden Ansprüche,
**dadurch gekennzeichnet,**
daß das bei der Teilverdampfung des verunreinigten Wassers in den Wärmeübertragern und bei Verdampfung der Sole im Verdampfer gebildete Kondensat zusammengeführt und gemeinsam abgezogen wird.

17. Vorrichtung zur Durchführung des Verfahrens nach einem der vorhergehenden Ansprüche zur Gewinnung reinen Wassers und von im zu reinigenden Wasser gelösten oder suspendierten Stoffen mit einer am Eingang eines Verdampfers angeordneten Einrichtung zur feinen Verteilung des zu reinigenden Wassers in einen Schleppgasstrom und mit einem am Ausgang des Verdampfers angeschlossenen Salzabscheider für Feststoffpartikeln, die im Verdampfer durch Überhitzen des erzeugten Schleppgas/Wasserdampf-Gemisches gebildet werden, und mit einem dem Salzabscheider nachgeschalteten Wärmetauscher, der kondensatseitig vom gereinigten Schleppgas/Wasserdampf-Gemisch zu dessen Rückkühlung bis unter die Kondensationstemperatur des Wasserdampfes durchströmt ist, **dadurch gekennzeichnet,** daß der Einrichtung (32) zur feinen Verteilung des zu reinigenden Wassers zumindest ein mit erhitztem Wasserdampf betriebener Wärmetauscher (16) zur Soleerzeugung durch Teilverdampfung des zu reinigenden Wassers vorgeschaltet ist, wobei die Einrichtung (32) zur feinen Verteilung mit einem Soleabfluß (23) eines den Wärmetauscher (16) zur Soleerzeugung nachgeschalteten Abscheiders (20) verbunden ist und der Wasserdampfabzug (42) des Abscheiders (20) einerseits mit einem Kompressor (43) für den Wasserdampf verbunden ist, dessen Wasserdampfleitung (45) an einem Verdampfer (31) für das Schleppgas/Sole-Gemisch mündet, und andererseits an einen Wärmetauscher (16) zur Teilverdampfung des zu reinigenden Wassers angeschlossen ist, und daß der dem Salzabscheider (34) nachgeschaltete Wärmetauscher (14) verdampfungsseitig mit einem Zufluß (1) für das zu reinigende Wasser vor dessen Eintritt in den Wärmetauscher (16) zur Soleerzeugung verbunden ist.

18. Vorrichtung nach Anspruch 17, **dadurch gekennzeichnet,** daß zur Teilverdampfung des zu reinigenden Wassers mehrere Wärmetauscher (12, 16; 12a, 16a, 55; 12b, 16b, 55b; 12c, 16c, 55c) hintereinandergeschaltet sind.

19. Vorrichtung nach Anspruch 18, **dadurch gekennzeichnet,** daß dem vom gereinigten Schleppgas/Wasserdampf-Gemisch durchströmten Wärmetauscher (14) ein Wärmetauscher (12) für das zu reinigende Wasser parallelgeschaltet ist, der wärmeträgerseitig vom Kondensat des komprimierten Wasserdampfes durchströmt ist.

20. Vorrichtung nach einem der Ansprüche 18 oder 19,

**dadurch gekennzeichnet,** daß einer der Wärmetauscher (4) für das zu reinigende Wasser wärmeträgerseitig mit dem Soleabfluß (23) des Abscheiders (20) vor Zufluß zur Einrichtung (32) zur feinen Verteilung angeschlossen ist.

21. Vorrichtung nach einem der Ansprüche 17 bis 20, **dadurch gekennzeichnet,** daß einer der Wärmetauscher (3) für das zu reinigende Wasser wärmeträgerseitig vom Kondensat des Wasserdampfes aus dem Schleppgas/Wasserdampf-Gemisch durchströmt ist.

22. Vorrichtung nach einem der Ansprüche 17 bis 21, **dadurch gekennzeichnet,** daß vor einem der Wärmetauscher (16) zur Teilverdampfung des zu reinigenden Wassers in den Wasserstrom eine Salzleitung für Salze mündet, die der Art von vom Wasser mitgeführten Inkrustationsbildnern entsprechen, und daß dem Wärmetauscher (16) ein Abscheider (20) für die zugegebenen Salze nachgeschaltet ist.

23. Vorrichtung nach Anspruch 22, **dadurch gekennzeichnet,** daß am Abscheider (20) für das abgeschiedene Salz eine Rückführleitung (22) angeschlossen ist, die vor den Wärmetauscher (16) in eine das zu reinigende Wasser führende Sammelleitung (15) mündet.

24. Vorrichtung nach einem der Ansprüche 17 bis 23, **dadurch gekennzeichnet,** daß vor dem Wärmetauscher (16) für die Soleerzeugung in die Sammelleitung (15) eine abrasive Stoffe führende Leitung mündet, daß dem Wärmetauscher (16) ein Abscheider (20) für die abrasiven Stoffe nachgeschaltet ist, und daß vom Abscheider (20) eine Rückführleitung (22) in die zu reinigendes Wasser führende Sammelleitung (15) mündet.

25. Vorrichtung nach einem der Ansprüche 17 bis 24, **dadurch gekennzeichnet,** daß in die Solezuführung (29) zum Verdampfer (31) eine Salzkeimzufuhr (54) mündet.

26. Vorrichtung nach Anspruch 25, **dadurch gekennzeichnet,** daß die Salzkeimzufuhr (54) an der Saugseite einer Solepumpe (28) angeschlossen ist.

**27.** Vorrichtung nach einem der Ansprüche 18 bis 26,

**dadurch gekennzeichnet,**

daß der letzte Wärmetauscher (55) zur Teilverdampfung des zu reinigenden Wassers wärmeträgerseitig am Wasserdampfabzug (61) des Abscheiders (56) des vorletzten Wärmetauschers (16a) zur Teilverdampfung des verunreinigten Wassers angeschlossen ist.

**28.** Vorrichtung nach einem der vorhergehenden Ansprüche 18 bis 27,

**dadurch gekennzeichnet,**

daß die Wasserdampfleitung (44′) des dem letzten Wärmetauscher (55) zur Teilverdampfung des zu reinigenden Wassers nachgeschalteten Abscheiders (20a) zur Wärmeträgerseite eines dem letzten Wärmetauscher (55) vorgeschalteten Wärmetauschers (16a) geführt ist.

**29.** Vorrichtung nach einem der Ansprüche 18 bis 28,

**dadurch gekennzeichnet,**

daß in der Soleleitung (58b) eines Abscheiders (56b) ein Druckminderer (70) eingesetzt ist.

**30.** Vorrichtung nach einem der Ansprüches 17 bis 29,

**dadurch gekennzeichnet,**

daß der Wasserdampf von den dem vorletzten und letzten Wärmetauscher (16c, 55c) nachgeschalteten Abscheidern (56c, 20c) von je einem Kompressor (60c, 75) abgesaugt wird, und daß die druckbelastete Wasserdampfleitung des einen Kompressors (60c) wärmeträgerseitig am Verdampfer (31c) für das Schleppgas/Sole-Gemisch, und die Wasserdampfleitung (44c) des anderen Kompressors (75) wärmeträgerseitig zu einem Wärmetauscher (16c) zur Teilverdampfung des zu reinigenden Wassers geführt ist.

**31.** Vorrichtung nach einem der Ansprüche 17 bis 30,

**dadurch gekennzeichnet,**

daß zur Erzeugung von Wasserdampf ein gesonderter Dampferzeuger (46) vorhanden ist.

**32.** Vorrichtung nach einem der Ansprüche 17 bis 31,

**dadurch gekennzeichnet,**

daß alle Kondensat führenden Leitungen mit einer das Kondensat gesammelt abführenden Wasserleitung (40) verbunden sind.

**Claims**

**1.** Process for production of pure water and therein contained soluble substances by feeding water containing these soluble substances in fine distribution into an inert stream of drag gas whilst setting a specified partial pressure of the drag gas in the drag gas/water-vapour mixture which is established by heating the drag gas/water mixture to evaporation of the water and by overheating the produced water vapour, and by subsequent separation of solid particles contained in the drag gas/water-vapour mixture, removal of the cleansed drag gas/water-vapour mixture and by cooling the mixture down to condensation of the water vapour in the drag gas/water-vapour mixture whilst transferring heat to a medium which is to be heated whilst carrying out the process, **characterised in that** the water to be cleansed is initially partially evaporated by delivering heat, and that the brine formed by said partial evaporation is fed in fine distribution into the stream of drag gas, that after separation of the brine the water vapour formed by said partial evaporation is at least partially compressed and used, whilst releasing heat, on the one hand for heating the stream of drag gas after feeding the brine in order to set the water-drop free drag gas/water-vapour mixture, and on the other hand for partial evaporation of the water to be cleansed, and that the cleansed drag gas/water-vapour mixture preheats the water to be cleansed, whilst cooling and condensing its content of water vapour.

**2.** Process according to claim 1, **characterised in that** partial evaporation of at least part of the water to be cleansed is carried out in a plurality of heat-exchanger stages.

**3.** Process according to one of claims 1 or 2, **characterised in that** the drag gas/water-vapour mixture preheats only part of the water to be cleansed, and that the other part is heated by compressed water vapour whilst utilizing residue heat.

**4.** Process according to one of claims 1, 2 or 3, **characterised in that** the water to be cleansed is preheated by way of a heat exchange with the brine prior to delivery of the brine into the drag gas.

**5.** Process according to one of the above claims, **characterised in that** the water to be cleansed is preheated by condensation which has been separated from the drag gas/water-vapour mixture.

**6.** Process according to one of the above claims, **characterised in that,** prior to partial evaporation of the water to be cleansed, salts are added which correspond with the type of incrustation formers contained in the water, and that these salts are added in such quantity that oversaturation of the water takes place, in particular between 10 and 30% relative to the added salts, which are isolated from the produced brine after partial evaporation.

**7.** Process according to claim 6, **characterised in that** a portion of the isolated salts is reintroduced to the water prior to its partial evaporation.

**8.** Process according to one of the above claims, **characterised in that** the water contains abrasive substances during its partial evaporation.

**9.** Process according to one of the above claims, **characterised in that,** for the purpose of forming salt, salt nuclei are introduced into a brine obtained during partial evaporation, in particular up to between 10 and 30% oversaturation of the brine.

**10.** Process according to claim 9, **characterised in that** the salt nuclei are added prior to entry of the brine into a brine conveying brine pump.

**11.** Process according to one of the above claims, **characterised in that** vapour, which has formed in a plurality of heat-exchanger stages, is extracted from the last and last but one heat-exchanger stage during partial evaporation of the water to be cleansed.

**12.** Process according to claim 11, **characterised in that** the brine in the last heat-exchanger stage is heated by water vapour formed in the lat but one heat-exchanger stage.

**13.** Process according to one of claims 11 or 12, **characterised in that** water vapour formed in the last heat-exchanger stage serves to heat a heat-exchanger stage ahead thereof.

**14.** Process according to one of claims 11, 12 or 13, **characterised in that** water vapour flowing out of the last but one heat-exchangeer stage flows at unchanged pressure as a heating medium through the last heat-exchanger stage, and that the brine obtained in the last but one heat-exchanger stage is pressure-reduced prior to entry into the last heat-exchanger stage.

**15.** Process according to one of claims 11 to 14, **characterised in that** water vapour formed in the heat-exchanger stages is at least partially combined with water vapour to be compressed prior of compression of the latter.

**16.** Process according to one of the above claims, **characterised in that** the condensation, which is formed during partial evaporation of the soiled water in the heat exchangers and during evaporation of the brine in the evaporator, is combined and extracted together.

**17.** Device for carrying out the process according to one of the above claims for production of pure water and of substances dissolved or suspended in the water to be cleansed, by means of a device, which is arranged at the inlet of an evaporator, for fine distribution of the water to be cleansed into a stream of drag gas, and a salt separator, which is connected at the outlet of the evaporator, for solid particles which are formed in the evaporator by overheating a produced drag gas/water-vapour mixture, and a heat exchanger at the outlet side of the salt separator, which is flowed through at the side of condensation by cleansed drag gas/water-vapour mixture so as to re-cool it to below condensation temperature of the water vapour, **characterised in that** the device (32) for fine distribution of the water to be cleansed is preceded by at least one heat exchanger (16), which is operated by heated water vapour, for the purpose of producing a brine by partial evaporation of the water to be cleansed, in which respect the device (32) for fine distribution is connected to a brine drain (23) of a separator (20) arranged on the outlet side of a heat exchanger (16) for producing brine, and that the water-vapour extractor (42) of the separator (20) is on the one hand connected to a compressor (43) for the water vapour, the water-vapour pipe (45) of which terminates in an evaporator (31) for the drag gas/brine mixture, and on the other hand connected to a heat exchanger (16) for partial evaporation of the water to be cleansed, and that the salt separator (34) on the outlet side of the heat exchanger (14) is connected on the evaporation side to an inlet (1) for water to be cleansed prior to its entry into the heat exchanger (16) for producing brine.

18. Device according to claim 17, **characterised in that** a plurality of heat exchangers (12, 16; 12a, 16a, 55; 12b, 16b, 55b; 12c, 16c, 55c) are arranged in series for the purpose of partial evaporation of the water to be cleansed.

19. Device according to claim 18, **characterised in that** a heat exchanger (12) for the water to be cleansed, which is flowed through at the side of the heat carrier by condensation of compressed water vapour, is connected in parallel with the heat exchanger (14), which is flowed through by cleansed drag gas/water-vapour mixture.

20. Device according to one of claims 18 or 19, **characterised in that** one of the heat exchangers (4) for the water to be cleansed is connected at the side of the heat carrier to a brine drain (23) of the separator (20) ahead of the inlet to the device (32) for fine distribution.

21. Device according to one of claims 17 to 20, **characterised in that** one of the heat exchangers (3) for the water to be cleansed is flowed through at the side of the heat carrier by condensation of water vapour from the drag gas/water-vapour mixture.

22. Device according to one of claims 17 to 21, **characterised in that** into the water stream in front of one of the heat exchangers (16) for partial evaporation of the water to be cleansed terminates a salt pipe for salts which correspond with the type of incrustation formers contained in the water, and that the heat exchanger (16) has at its outlet side a separator (20) for added salts.

23. Device according to claim 22, **characterised in that** to the separator (20) for separated salt is connected a return pipe (22) which terminates in front of the heat exchanger (16) into a collective pipe (15) which ducts the water to be cleansed.

24. Device according to one of claims 17 to 23, **characterised in that** a pipe containing abrasive substances terminates in the collective pipe (15) in front of the heat exchanger (16) for production of brine, that the heat exchanger (16) has at its outlet side a separator (20) for abrasive substances, and that a return pipe (22) from the separator (20) terminates in the collective pipe (15) which ducts the water to be cleansed.

25. Device according to one of claims 17 to 24, **characterised in that** a salt-nuclei feed (54) terminates in the brine feed (29) to the evaporator (31).

26. Device according to claim 25, **characterised in that** the salt-nuclei feed (54) is connected to the suction side of a brine pump (28).

27. Device according to one of claims 18 to 26, **characterised in that** the last heat exchanger (55) for partial evaporation of the water to be cleansed is connected at the side of the heat carrier to the water-vapour extraction (61) of the separator (56) of the last but one heat exchanger (16a) for partial evaporation of soiled water.

28. Device according to one of the above claims 18 to 27, **characterised in that** the water-vapour pipe (44') of the separator (20a) which is connected on the outlet side of the final separator (20a) for partial evaporation of the water to be cleansed connects to the heat-carrier side of a heat exchanger (16a) which precedes the final heat exchanger (55).

29. Device according to one of claims 18 to 28, **characterised in that** a pressure reducer (70) is inserted into the brine pipe (58b) of a separator (56b).

30. Device according to one of claims 17 to 29, **characterised in that** the water vapour is sucked off respective separators (56c, 20c), which are connected on the outlet side of the last but one and the final heat exchanger (16c, 55) by a respective compressor (60c, 75), and that the pressurized water-vapour pipe of the one compressor (60c), is connected at the side of the heat carrier to the evaporator (31c) for the drag gas/brine mixture, and the water-vapour pipe (44c) of the other compressor (75) is connected at the side of the heat carrier to a, heat exchanger (16c) for partial evaporation of the water to be cleansed.

31. Device according to one of claims 17 to 30, **characterised in that** there is a separate vapourizer (46) for producing water vapour.

32. Device according to one of claims 17 to 31, **characterised in that** all pipes carrying condensation are connected to a water pipe (40) which collectively expels condensation.

## Revendications

1. Procédé d'obtention d'eau pure et de substances dissoutes dans l'eau, par introduction d'eau contenant les substances dissoutes, à l'état finement divisé dans un courant de gaz inerte d'entraînement, en établissant une pression partielle prescrite pour le gaz d'entraînement dans le mélange de gaz d'entraînement et de vapeur d'eau, qui est formé en chauffant le mélange de gaz d'entraînement et d'eau jusqu'à évaporation de l'eau et jusqu'à surchauffe de la vapeur d'eau produite, et ensuite par dépôt des particules de substance solide contenues dans le mélange de gaz d'entraînement et de vapeur d'eau, par évacuation du mélange purifié de gaz d'entraînement et de vapeur d'eau et par refroidissement du mélange jusqu'à la condensation de la vapeur d'eau du mélange de gaz d'entraînement et de vapeur d'eau, avec transmission de chaleur à un fluide à réchauffer lors de la mise en oeuvre du procédé, caractérisé en ce qu'il consiste à évaporer, d'abord partiellement, l'eau à purifier par apport de chaleur et à introduire la saumure, formée par évaporation partielle, à l'état finement divisé dans le courant de gaz d'entraînement, la vapeur d'eau formée par l'évaporation partielle, étant au moins partiellement comprimée après le dépôt de la saumure et servant, en cédant de chaleur, d'une part, à chauffer le courant de gaz d'entraînement après envoi de la saumure pour régler le mélange exempt de gouttelettes d'eau, de gaz d'entraînement et d'eau et, d'autre part, à évaporer partiellement l'eau à purifier, et le mélange purifié de gaz d'entraînement et de vapeur d'eau préchauffant, avec refroidissement et condensation de la vapeur d'eau qu'il contient, l'eau à purifier.

2. Procédé suivant la revendication 1, caractérisé en ce qu'il consiste à effectuer l'évaporation partielle, au moins pour une partie de l'eau à purifier, dans plusieurs étages d'échangeur de chaleur.

3. Procédé suivant l'une des revendications 1 ou 2, caractérisé en ce qu'il consiste à préchauffer, par le mélange de gaz d'entraînement et de vapeur d'eau, seulement une partie de l'eau à purifier, et à chauffer l'autre partie de la vapeur d'eau comprimée en utilisant de la chaleur résiduelle.

4. Procédé suivant l'une des revendications 1, 2 ou 3, caractérisé en ce qu'il consiste à préchauffer l'eau à purifier par échange de chaleur avec la saumure avant d'introduire la saumure dans le gaz d'entraînement.

5. Procédé suivant l'une des revendications précédentes, caractérisé en ce qu'il consiste à préchauffer l'eau à purifier par le produit condensé séparé du mélange de gaz d'entraînement et de vapeur d'eau.

6. Procédé suivant l'une des revendications précédentes, caractérisé en ce qu'il consiste à ajouter à l'eau à purifier, avant son évaporation partielle, des sels qui correspondent à la nature des sources d'incrustations entraînées par l'eau, et à ajouter les sels en une quantité telle qu'il se produit une sursaturation de l'eau, notamment une sursaturation de 10 à 30 % en les sels ajoutés, lesquels, après l'évaporation partielle, sont séparés de la saumure produite.

7. Procédé suivant la revendication 6, caractérisé en ce qu'il consiste à retourner une partie des sels séparés à l'eau, avant son évaporation partielle.

8. Procédé suivant l'une des revendications précédentes, caractérisé en ce que l'eau contient des substances abrasives lors de son évaporation partielle.

9. Procédé suivant l'une des revendications précédentes, caractérisé en ce qu'il consiste, pour former des sels dans la saumure obtenue lors de l'évaporation partielle, à introduire des germes de sel, notamment jusqu'à une sursaturation de 10 a 30 % de la saumure.

10. Procédé suivant la revendication 9, caractérisé en ce qu'il consiste à ajouter les germes de sel avant l'entrée de la saumure dans une pompe la véhiculant.

11. Procédé suivant l'une des revendications précédentes, caractérisé en ce qu'il consiste à prélever, lors de l'évaporation partielle de l'eau à purifier, de la vapeur, formée dans plusieurs étages d'échangeur de chaleur, du dernier et de l'avant-dernier étages d'échangeur de chaleur.

12. Procédé suivant la revendication 11, caractérisé en ce qu'il consiste à chauffer la saumure dans le dernier étage d'échangeur de chaleur par de la vapeur d'eau formée dans l'avant-dernier étage d'échangeur de chaleur.

13. Procédé suivant l'une des revendications 1 ou 12, caractérisé en ce que la vapeur d'eau formée dans le dernier étage d'échangeur de chaleur sert à chauffer un étage d'échangeur de chaleur en amont.

14. Procédé suivant l'une des revendications 11, 12 ou 13, caractérisé en ce que de la vapeur d'eau, sortant de l'avant-dernier étage de l'échangeur de chaleur, passe, sous une pression constante en tant que fluide de chauffage, dans le dernier étage de chaleur, et la saumure obtenue dans l'avant-dernier étage d'échangeur de chaleur est détendue avant d'entrer dans le dernier étage d'échangeur de chaleur.

15. Procédé suivant l'une des revendications 11 à 14, caractérisé en ce qu'il consiste à réunir la vapeur d'eau formée dans les étages d'échangeur de chaleur, au moins en partie, à de la vapeur d'eau à comprimer avant sa compression.

16. Procédé suivant l'une des revendications précédentes, caractérisé en ce qu'il consiste à réunir et à soutirer en commun, lors de l'évaporation partielle de l'eau, le produit condensé formé dans les dispositifs de transfert de chaleur et dans l'évaporateur, lors de l'évaporation de la saumure.

17. Installation pour la mise en oeuvre du procédé suivant l'une des revendications précédentes, d'obtention d'eau pure et de substances dissoutes ou en suspension dans l'eau à purifier, comprenant un dispositif disposé à l'entrée d'un évaporateur et destiné à répartir finement l'eau à purifier dans un courant de gaz d'entraînement, et un séparateur de sel raccordé à la sortie de l'évaporateur et destiné à séparer des particules de matière solide, qui sont formées dans l'évaporateur par surchauffe du mélange produit de gaz d'entraînement et de vapeur d'eau, et un échangeur de chaleur qui est monté en aval du séparateur de sel, et dans lequel passe, du côté du produit condensé, le mélange purifié de gaz d'entraînement et de vapeur d'eau, en vue de le refroidir en-dessous du point de condensation de la vapeur d'eau, caractérisée en ce qu'en amont du dispositif (32) de répartition fine de l'eau à purifier, est monté au moins un échangeur de chaleur (16), qui fonctionne avec de la vapeur d'eau chauffée et qui est destiné à l'obtention d'une saumure par évaporation partielle de l'eau à purifier, le dispositif (32) de répartition fine communiquant avec une évacuation de saumure (23) d'un séparateur (20) monté en aval de l'échangeur de chaleur (16) et destiné à obtenir de la saumure, et l'évacuation de vapeur d'eau (42) du séparateur (20) communique d'une part, avec un compresseur (43) pour la vapeur d'eau, dont le conduit (45) pour la vapeur d'eau débouche dans un évaporateur (31) pour le mélange de gaz d'entraînement et de saumure et d'autre part, avec un échangeur de chaleur (16) pour l'évaporation partielle de l'eau à purifier, et en ce que l'échangeur de chaleur (14) monté en aval du séparateur de sel (34) communique, du côté de l'évaporation, avec une entrée (1) pour l'eau à purifier, avant que celle-ci ne pénètre dans l'échangeur de chaleur (16) pour produire de la saumure.

18. Installation suivant la revendication 17, caractérisée en ce que, pour l'évaporation partielle de l'eau à purifier, plusieurs échangeurs de chaleur (12,16; 12a,16a,55; 12b,16b,55b; 12c,16c,55c) sont montés en série.

19. Installation suivant la revendication 18, caractérisée en ce qu'en parallèle à l'échangeur de chaleur (14) dans lequel passe un mélange purifié de gaz d'entraînement de vapeur d'eau, est monté un échangeur de chaleur (12) qui est destiné à l'eau à purifier et dans lequel passe, du côté caloporteur, le produit condensé de la vapeur d'eau comprimée.

20. Installation suivant l'une des revendications 18 ou 19, caractérisée en ce que l'un des échangeurs de chaleur (4) pour l'eau à purifier communique, du côté caloporteur, avec l'évacuation de la saumure (23) du séparateur (20), en amont de l'entrée dans le dispositif (32) de répartition fine.

21. Installation suivant l'une des revendications 17 à 20, caractérisée en ce que, dans l'un des échangeurs de chaleur (3) pour l'eau à purifier, passe, du côté caloporteur, le produit condensé de la vapeur d'eau provenant du mélange de gaz d'entraînement et de vapeur d'eau.

22. Installation suivant l'une des revendications 17 à 21, caractérisée en ce qu'en amont de l'un des échangeurs de chaleur (16) destinés à l'évaporation partielle de l'eau à purifier, débouche, dans le courant d'eau, un conduit pour des sels qui correspondent à la nature de sources d'incrustations entraînées avec l'eau, et un séparateur (20) des sels ajoutés est monté en aval de l'échangeur de chaleur (16).

23. Installation suivant la revendication 22, caractérisée en ce qu'avec le séparateur (20) destiné au sel à séparer communique un conduit de recyclage (22) quir débouche en amont de l'échangeur de chaleur (16) dans un conduit collecteur (15), dans lequel passe l'eau à purifier.

24. Installation suivant l'une des revendications 17 à 23, caractérisée en ce qu'en aval de l'échangeur de chaleur (16) pour la production de saumure, un conduit, dans lequel passe une substance abrasive, débouche dans le conduit collecteur (15), en ce qu'en aval de l'échangeur de chaleur (16) est monté un séparateur (20) des substances abrasives, et en ce que, du séparateur (20), un conduit de recyclage (22) débouche dans le conduit collecteur (15), dans lequel passe l'eau à purifier.

25. Installation suivant l'une des revendications 17 à 24, caractérisée en ce que, dans le conduit d'entrée (29) de la saumure menant à l'évaporateur (31), débouche une entrée (54) de germes de sel.

26. Installation suivant la revendication 25, caractérisée en ce que l'entrée pour les germes de sels (54) communique avec le côté aspiration d'une pompe (28) de saumure.

27. Installation suivant l'une des revendications 18 à 26, caractérisée en ce que le dernier échangeur de chaleur (55) pour l'évaporation partielle de l'eau à purifier, communique, du côté caloporteur, avec l'évacuation (61) de vapeur d'eau du séparateur (56) de l'avant-dernier échangeur de chaleur (16a) pour l'évaporation partielle de l'eau polluée.

28. Installation suivant l'une des revendications précédentes 18 à 27, caractérisée en ce que le conduit (44') pour la vapeur d'eau du séparateur (20a) monté en aval du dernier échangeur de chaleur (55) pour l'évaporation partielle de l'eau à purifier, mène au côté caloporteur d'un échangeur de chaleur (16a) monté en amont du dernier échangeur de chaleur (55).

29. Installation suivant l'une des revendications 18 à 28, caractérisée en ce qu'un détendeur (70) est monté dans le conduit (58b) pour la saumure d'un séparateur (56b).

30. Installation suivant l'une des revendications 17 à 29, caractérisée en ce que la vapeur d'eau est aspirée des séparateurs (56c, 20c), montés en aval de l'avant-dernier et du dernier échangeur de chaleur (16c,55c), par des compresseurs (60c,75), et en ce que le conduit, pour de la vapeur d'eau sous pression, de l'un des compresseurs (60c) mène au côté caloporteur de l'évaporateur (31c) pour le mélange de gaz d'entraînement et de saumure, et le conduit de vapeur d'eau (44c) de l'autre compresseur (75) mène au côté caloporteur d'un échangeur de chaleur (16c) destiné à l'évaporation partielle de l'eau à purifier.

31. Installation suivant l'une des revendications 17 à 30, caractérisée en ce qu'il est prévu un générateur de vapeur (46) distinct pour la production de vapeur d'eau.

32. Installation suivant l'une des revendications 17 à 31, caractérisée en ce que tous les conduits, dans lesquels passe du produit condensé, communiquent avec un conduit (40) pour de l'eau évacuant le produit condensé collecté.

FIG. 1

Gips

Salz

Meer-Wasser

Kondensat

EP 0 363 838 B1

FIG. 2

22

FIG. 3

FIG. 4

FIG. 5

FIG. 6

T in °C
p in bar
ṁ in kg/h

FIG. 7

Kondensat

Meer-wasser

T in °C
p in bar
ṁ in kg/h